# EUROPÄISCHE PATENTSCHRIFT

(11) **EP 2 803 245 B1**
(45) Veröffentlichungstag und Bekanntmachung des Hinweises auf die Patenterteilung: **08.03.2017**
(21) Anmeldenummer: 12766998.4
(22) Anmeldetag: 04.10.2012
(51) Int. Cl.: H05B 3/86

(54) **TRANSPARENTE SCHEIBE MIT ELEKTRISCH LEITFÄHIGER BESCHICHTUNG**
TRANSPARENT PANE WITH ELECTRICALLY HEATABLE COATING
VITRAGE TRANSPARENT DOTÉ D'UN REVÊTEMENT POUVANT ÊTRE CHAUFFÉ DE MANIÈRE ÉLECTRIQUE

(30) Priorität: 10.01.2012 EP 12150546
(43) Veröffentlichungstag der Anmeldung: 19.11.2014
(73) Patentinhaber: Saint-Gobain Glass France, 92400 Courbevoie (FR)
(72) Erfinder: FISCHER, Klaus, 52477 Alsdorf (DE); JANZYK, Sebastian, 52134 Herzogenrath (DE); NEANDER, Marcus, 52249 Eschweiler (DE); SCHMITZ, Christoph, 53332 Bornheim (DE); MOREAU, Virginie, 75018 Paris (FR)
(74) Vertreter: Lendvai, Tomas
(86) Internationale Anmeldenummer: PCT/EP2012/069567
(87) Internationale Veröffentlichungsnummer: WO 2013/104439

(56) Entgegenhaltungen:
- WO-A1-92/04185
- WO-A1-2009/029466
- US-A- 4 902 580
- US-A1- 2005 202 254
- US-A1- 2008 210 303

## Beschreibung

Die Erfindung betrifft eine transparente Kraftfahrzeugscheibe mit elektrisch leitfähiger Beschichtung, ein Verfahren zu deren Herstellung und deren Verwendung.

Das Sichtfeld einer Fahrzeugscheibe, insbesondere einer Windschutzscheibe muss frei von Eis und Beschlag gehalten werden. Bei Kraftfahrzeugen mit Verbrennungsmotor kann beispielsweise ein mittels Motorwärme erwärmter Luftstrom auf die Scheiben gelenkt werden.

Alternativ kann die Scheibe eine elektrische Heizfunktion aufweisen. Aus DE 103 52 464 A1 ist beispielsweise eine Verbundglasscheibe bekannt, bei der zwischen zwei Glasscheiben elektrisch beheizbare Drähte eingelegt sind. Die spezifische Heizleistung P, beispielsweise etwa 600 W/m², kann dabei durch den ohmschen Widerstand der Drähte eingestellt werden. Aufgrund von Design- und Sicherheitsaspekten muss die Anzahl sowie der Durchmesser der Drähte möglichst klein gehalten werden. Die Drähte dürfen bei Tageslicht und nachts bei Scheinwerferlicht visuell nicht oder kaum wahrnehmbar sein.

Es sind auch transparente, elektrisch leitfähige Beschichtungen insbesondere auf Silberbasis bekannt. Solche elektrisch leitfähigen Beschichtungen können als Beschichtungen mit reflektierenden Eigenschaften für den Infrarotbereich oder auch als beheizbare Beschichtungen verwendet werden. WO 03/024155 A2 offenbart beispielsweise eine elektrisch leitfähige Beschichtung mit zwei Silberlagen. Solche Beschichtungen weisen in der Regel Flächenwiderstände im Bereich von 3 Ohm/Quadrat bis 5 Ohm/Quadrat auf.

Die spezifische Heizleistung P einer elektrisch beheizbaren Beschichtung mit einem Flächenwiderstand R_{Quadrat}, einer Betriebsspannung U und einem Abstand h zwischen zwei Sammelleitern lässt sich mit der Formel P = U²/(R_{Quadrat}*h²) berechnen. Der Abstand h zwischen zwei Sammelleitern beträgt bei typischen Windschutzscheiben von Personenkraftwagen etwa 0,8 m, was ungefähr der Scheibenhöhe entspricht. Um bei einem Flächenwiderstand von 4 Ohm/Quadrat eine gewünschte spezifische Heizleistung P von 600 W/m² zu erzielen, ist eine Betriebsspannung U von etwa 40 V notwendig. Da die Bordspannung von Kraftfahrzeugen üblicherweise 14 V beträgt, ist ein Netzteil oder ein Spannungswandler notwendig, um eine Betriebsspannung von 40 V zu erzeugen. Eine Spannungserhöhung von 14 V auf 40 V ist immer mit elektrischen Leitungsverlusten und zusätzlichen Kosten für zusätzliche Bauelemente verbunden. US 2007/0082219 A1 und US 2007/0020465 A1 offenbaren transparente, elektrisch leitfähige Beschichtungen mit mindestens drei Silberlagen. Für Beschichtungen auf Basis dreier Silberlagen sind in US 2007/0082219 A1 Flächenwiderstände um 1 Ohm/Quadrat angegeben. Für eine Betriebsspannung U = 14 V, einen Flächenwiderstand R_{Quadrat} = 1 Ohm/Quadrat und einen Abstand h = 0,8 m ergibt sich eine spezifische Heizleistung P von etwa 300 W/m².

Zur Bereitstellung einer ausreichenden spezifischen Heizleistung P, beispielsweise etwa 500 W/m², insbesondere zur Beheizung größerer Scheiben ist eine weitere Reduzierung des Flächenwiderstands der elektrisch beheizbaren Beschichtung erforderlich. Dies kann bei einer elektrisch beheizbaren Beschichtung mit typischerweise drei Silberlagen durch eine Erhöhung der Dicke der einzelnen Silberschichten erreicht werden. Eine zu große Schichtdicke der Silberschichten führt jedoch zu mangelhaften optischen Eigenschaften der Scheibe, insbesondere im Hinblick auf Transmission und Farbwirkung, so dass gesetzliche Vorschriften, wie sie beispielsweise in ECE R 43 ("Einheitliche Vorschriften für die Genehmigung des Sicherheitsglases und der Verbundglaswerkstoffe") festgelegt sind, nicht eingehalten werden können.

Der ausreichend geringe Flächenwiderstand kann auch durch die Verwendung von vier Silberlagen in der leitfähigen Beschichtung erreicht werden, wobei die optischen Eigenschaften der Scheibe infolge von geringen Schichtdicken der einzelnen Silberlagen den gesetzlichen Vorgaben entsprechen. Das Aufbringen von Beschichtungen mit vier oder mehr Silberschichten ist jedoch technisch aufwendig und kostenintensiv.

Die Dokumente WO 2009/029466 A1, US 2008/0210303 A1 und US-A-4 902 580 offenbaren weitere Scheiben aus dem Stand der Technik.

Die Aufgabe der vorliegenden Erfindung besteht darin, eine transparente Scheibe mit verbesserter elektrisch leitfähiger Beschichtung bereitzustellen. Die elektrisch leitfähige Beschichtung soll insbesondere einen im Vergleich zum Stand der Technik geringeren Flächenwiderstand R_{Quadrat} und damit eine verbesserte spezifische Heizleistung P sowie verbesserte reflektierende Eigenschaften für den Infrarotbereich aufweisen. Die Scheibe soll dabei eine hohe Transmission und eine hohe Farbneutralität aufweisen und kostengünstig herstellbar sein.

Die Aufgabe der vorliegenden Erfindung wird erfindungsgemäß durch eine transparente Kraftfahrzeugscheibe gemäß Anspruch 1 gelöst. Bevorzugte Ausführungen gehen aus den Unteransprüchen hervor.

Die erfindungsgemäße transparente Scheibe umfasst mindestens ein transparentes Substrat und mindestens eine elektrisch leitfähige Beschichtung auf mindestens einer Oberfläche des transparenten Substrats, wobei
- die elektrisch leitfähige Beschichtung mindestens zwei übereinander angeordnete funktionelle Schichten aufweist und jede funktionelle Schicht mindestens
   - eine Antireflexionsschicht,
   - oberhalb der Antireflexionsschicht eine erste Anpassungsschicht und
   - oberhalb der ersten Anpassungsschicht eine elektrisch leitfähige Schicht umfasst und
- zumindest eine funktionelle Schicht eine Antireflexionsschicht umfasst, die mindestens
   - eine Schicht eines dielektrischen Materials mit einem Brechungsindex kleiner 2,1 und
   - eine Schicht eines optisch hochbrechenden Materials mit einem Brechungsindex größer oder gleich 2,1 umfasst.

Ist eine erste Schicht oberhalb einer zweiten Schicht angeordnet, so bedeutet dies im Sinne der Erfindung, dass die erste Schicht weiter vom transparenten Substrat entfernt angeordnet ist als die zweite Schicht. Ist eine erste Schicht unterhalb einer zweiten Schicht angeordnet ist, so bedeutet dies im Sinne der Erfindung, dass die zweite Schicht weiter vom transparenten Substrat entfernt angeordnet ist als die erste Schicht. Die oberste funktionelle Schicht ist diejenige funktionelle Schicht, die den größten Abstand zum transparenten Substrat aufweist. Die unterste funktionelle Schicht ist diejenige funktionelle Schicht, die den geringsten Abstand zum transparenten Substrat aufweist.

Eine Schicht im Sinne der Erfindung kann aus einem Material bestehen. Eine Schicht kann aber auch zwei oder mehrere Einzelschichten unterschiedlichen Materials umfassen. Eine erfindungsgemäße funktionelle Schicht umfasst beispielsweise zumindest eine Antireflexionsschicht, eine erste und eine zweite Anpassungsschicht und eine elektrisch leitfähige Schicht.

Ist eine erste Schicht oberhalb oder unterhalb einer zweiten Schicht angeordnet, so bedeutet dies im Sinne der Erfindung nicht notwendigerweise, dass sich die erste und die zweite Schicht in direktem Kontakt miteinander befinden. Es können eine oder mehrere weitere Schichten zwischen der ersten und der zweiten Schicht angeordnet sein, sofern dies nicht explizit ausgeschlossen wird.

Die elektrisch leitfähige Beschichtung ist erfindungsgemäß zumindest auf einer Oberfläche des transparenten Substrats aufgebracht. Es können auch beide Oberflächen des transparenten Substrats mit einer erfindungsgemäßen elektrisch leitfähigen Beschichtung versehen sein.

Die elektrisch leitfähige Beschichtung kann sich über die gesamte Oberfläche des transparenten Substrats erstrecken. Die elektrisch leitfähige Beschichtung kann sich alternativ aber auch nur über einen Teil der Oberfläche des transparenten Substrats erstrecken. Die elektrisch leitfähige Beschichtung erstreckt sich bevorzugt über mindestens 50%, besonders bevorzugt über mindestens 70% und ganz besonders bevorzugt über mindestens 90% der Oberfläche des transparenten Substrats.

Die elektrisch leitfähige Beschichtung kann direkt auf der Oberfläche des transparenten Substrats aufgebracht sein. Die elektrisch leitfähige Beschichtung kann alternativ auf eine Trägerfolie aufgebracht sein, die mit dem transparenten Substrat verklebt ist.

Jede funktionelle Schicht der erfindungsgemäßen elektrisch leitfähigen Beschichtung umfasst eine Antireflexionsschicht. Die Antireflexionsschichten bewirken insbesondere eine Verringerung des Reflexionsgrads und damit eine Erhöhung der Transmission der erfindungsgemäßen Beschichtung im sichtbaren Spektralbereich. Zumindest eine dieser Antireflexionsschichten umfasst erfindungsgemäß zumindest zwei Schichten: eine Schicht eines dielektrischen Materials mit einem Brechungsindex kleiner 2,1 und eine Schicht eines optisch hochbrechenden Materials mit einem Brechungsindex größer oder gleich 2,1. Eine Antireflexionsschicht ist im Sinne der Erfindung zwischen zwei elektrisch leitfähigen Schichten angeordnet, wenn zumindest eine elektrisch leitfähige Schicht oberhalb der Antireflexionsschicht und wenn zumindest eine elektrisch leitfähige Schicht unterhalb der Antireflexionsschicht angeordnet ist. Die Antireflexionsschicht steht aber erfindungsgemäß nicht in direktem Kontakt zu den benachbarten elektrisch leitfähigen Schichten.

Die angegebenen Werte für Brechungsindizes sind bei einer Wellenlänge von 550 nm gemessen.

Der besondere Vorteil der Erfindung liegt in der Ausgestaltung zumindest einer Antireflexionsschicht, welche erfindungsgemäß mindestens eine Schicht eines dielektrischen Materials mit einem Brechungsindex kleiner 2,1 und mindestens eine Schicht eines optisch hochbrechenden Materials mit einem Brechungsindex größer oder gleich 2,1 umfasst. Es hat sich überraschend gezeigt, dass eine solche Antireflexionsschicht zu einem geringeren Flächenwiderstand der elektrisch leitfähigen Beschichtung führt bei gleichzeitig hoher Transmission und hoher Farbneutralität.

Im Vergleich zum Stand der Technik kann durch die erfindungsgemäße Ausgestaltung der elektrisch leitfähigen Beschichtung bei gleichbleibendem Flächenwiderstand die Dicke der elektrisch leitfähigen Schichten verringert werden. Dünnere elektrisch leitfähige Schichten führen zu einer besseren Transmission und einer neutraleren Farbgebung der erfindungsgemäßen transparenten Scheibe mit elektrisch leitfähiger Beschichtung.

Die erfindungsgemäße transparente Scheibe mit elektrisch leitfähiger Beschichtung weist bevorzugt eine Gesamttransmission von größer 70 % auf. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben.

Die elektrisch leitfähige Beschichtung der erfindungsgemäßen transparenten Scheibe weist bevorzugt einen Flächenwiderstand kleiner oder gleich 1 Ohm/Quadrat auf, besonders bevorzugt von 0,4 Ohm/Quadrat bis 0,9 Ohm/Quadrat, ganz besonders bevorzugt von 0,5 Ohm/Quadrat bis 0,85 Ohm/Quadrat, beispielsweise etwa 0,7 Ohm/Quadrat. In diesem Bereich für den Flächenwiderstand werden vorteilhaft hohe spezifische Heizleistungen P erreicht. Außerdem weist die elektrisch leitfähige Beschichtung in diesem Bereich für den Flächenwiderstand besonders gute reflektierende Eigenschaften für den Infrarotbereich auf.

Zur Erhöhung der Gesamttransmission und / oder zur Verringerung des Flächenwiderstands kann die transparente Scheibe mit elektrisch leitfähiger Beschichtung einer Temperaturbehandlung, beispielsweise bei einer Temperatur von 500 °C bis 700 °C, unterzogen werden.

Es hat sich gezeigt, dass die erfindungsgemäße elektrisch leitfähige Beschichtung einer solchen Temperaturbehandlung unterzogen werden kann, ohne dass die Beschichtung beschädigt wird. Die erfindungsgemäße transparente Scheibe kann zudem konvex oder konkav gebogen werden, ohne dass die Beschichtung beschädigt wird. Das sind große Vorteile der erfindungsgemäßen elektrisch leitfähigen Beschichtung.

Die Schicht eines optisch hochbrechenden Materials kann oberhalb oder unterhalb der Schicht eines dielektrischen Materials mit einem Brechungsindex kleiner 2,1 angeordnet sein. Die Schicht eines optisch hochbrechenden Materials ist bevorzugt oberhalb der Schicht eines dielektrischen Materials mit einem Brechungsindex kleiner 2,1 angeordnet. Dadurch wird ein besonders vorteilhafter Flächenwiderstand der elektrisch leitfähigen Beschichtung erreicht.

Die Dicke der Schicht eines optisch hochbrechenden Materials mit einem Brechungsindex größer oder gleich 2,1 beträgt bevorzugt von 10 % bis 99 %, besonders bevorzugt von 25 % bis 75 %, ganz besonders bevorzugt von 33 % bis 67 % der Dicke der Antireflexionsschicht, welche diese Schicht eines optisch hochbrechenden Materials enthält. Das ist besonders vorteilhaft im Hinblick auf den Flächenwiderstand der elektrisch leitfähigen Beschichtung und die optischen Eigenschaften sowie eine kostengünstige Herstellung der erfindungsgemäßen transparenten Scheibe.

In einer vorteilhaften Ausgestaltung der Erfindung umfasst zumindest eine zwischen zwei elektrisch leitfähigen Schichten angeordnete Antireflexionsschicht zumindest eine Schicht eines dielektrischen Materials mit einem Brechungsindex kleiner 2,1 und eine Schicht eines optisch hochbrechenden Materials mit einem Brechungsindex größer oder gleich 2,1. Damit werden besonders gute Ergebnisse erzielt. Eine Antireflexionsschicht ist im Sinne der Erfindung zwischen zwei elektrisch leitfähigen Schichten angeordnet, wenn sie zwischen zwei benachbarten elektrisch leitfähigen Schichten der Schichtenfolge angeordnet ist.

In einer besonders vorteilhaften Ausgestaltung der Erfindung umfasst jede zwischen zwei elektrisch leitfähigen Schichten angeordnete Antireflexionsschicht zumindest eine Schicht eines dielektrischen Materials mit einem Brechungsindex kleiner 2,1 und eine Schicht eines optisch hochbrechenden Materials mit einem Brechungsindex größer oder gleich 2,1. Das ist besonders vorteilhaft im Hinblick auf den Flächenwiderstand der elektrisch leitfähigen Beschichtung und die optischen Eigenschaften der erfindungsgemäßen transparenten Scheibe.

Die zwischen zwei elektrisch leitfähigen Schichten angeordneten Antireflexionsschichten weisen bevorzugt Schichtdicken von 35 nm bis 70 nm, besonders bevorzugt von 45 nm bis 60 nm auf. Diese Bereiche für die Schichtdicke sind insbesondere für Antireflexionsschichten bevorzugt, die zumindest eine Schicht eines dielektrischen Materials mit einem Brechungsindex kleiner 2,1 und eine Schicht eines optisch hochbrechenden Materials mit einem Brechungsindex größer oder gleich 2,1 umfassen. Damit werden besonders vorteilhafte Flächenwiderstände der elektrisch leitfähigen Beschichtung erreicht.

Die Schicht eines optisch hochbrechenden Materials weist bevorzugt einen Brechungsindex n von 2,1 bis 2,5 auf, besonders bevorzugt von 2,1 bis 2,3.

Die Schicht eines optisch hochbrechenden Materials mit einem Brechungsindex größer oder gleich 2,1 enthält bevorzugt zumindest ein Silizium-Metall-Mischnitrid, besonders bevorzugt zumindest ein Silizium-Zirkonium-Mischnitrid. Das ist besonders vorteilhaft im Hinblick auf den Flächenwiderstand der elektrisch leitfähigen Beschichtung. Das Silizium-Zirkonium-Mischnitrid weist bevorzugt Dotierungen auf. Die Schicht eines optisch hochbrechenden Materials kann beispielsweise ein Aluminium-dotiertes Silizium-Zirkonium-Mischnitrid enthalten.

Das Silizium-Zirkonium-Mischnitrid wird bevorzugt mittels magnetfeldunterstützter Kathodenzerstäubung mit einem Target abgeschieden, welches von 40 Gew. % bis 70 Gew. % Silizium, von 30 Gew. % bis 60 Gew. % Zirkonium und von 0 Gew. % bis 10 Gew. % Aluminium sowie herstellungsbedingte Beimengungen enthält. Das Target enthält besonders bevorzugt von 45 Gew. % bis 60 Gew. % Silizium, von 35 Gew. % bis 55 Gew. % Zirkonium und von 3 Gew. % bis 8 Gew. % Aluminium sowie herstellungsbedingte Beimengungen. Die Abscheidung des Silizium-Zirkonium-Mischnitrids erfolgt bevorzugt unter Zugabe von Stickstoff als Reaktionsgas während der Kathodenzerstäubung.

Die Schicht eines optisch hochbrechenden Materials kann aber auch beispielsweise zumindest Silizium-Aluminium-Mischnitrid, Silizium-Hafnium-Mischnitrid oder Silizium-Titan-Mischnitrid enthalten. Die Schicht optisch hochbrechenden Materials kann alternativ beispielsweise MnO, WO₃, Nb₂O₅, Bi₂O₃, TiO₂, Zr₃N₄ und / oder AlN enthalten.

Die Schichtdicke der Schicht eines optisch hochbrechenden Materials beträgt bevorzugt von 3,5 nm bis 69 nm.

Die Schicht eines dielektrischen Materials mit einem Brechungsindex kleiner 2,1 weist bevorzugt einen Brechungsindex n zwischen 1,6 und 2,1 auf, besonders bevorzugt zwischen 1,9 und 2,1.

Die Schicht eines dielektrischen Materials enthält bevorzugt zumindest ein Oxid, beispielsweise Zinnoxid, und / oder ein Nitrid, besonders bevorzugt Siliziumnitrid. Die Schicht eines dielektrischen Materials weist bevorzugt eine Schichtdicke von 0,3 nm bis 63 nm auf.

Die elektrisch leitfähige Schicht enthält bevorzugt zumindest ein Metall, beispielsweise Kupfer oder Gold, oder eine Legierung, besonders bevorzugt Silber oder eine silberhaltige Legierung. Die elektrisch leitfähige Schicht kann aber auch andere, dem Fachmann bekannte elektrisch leitfähige Materialen enthalten.

In einer vorteilhaften Ausgestaltung der Erfindung enthält die elektrisch leitfähige Schicht mindestens 90 Gew. % Silber, bevorzugt mindestens 99,9 Gew. % Silber. Die elektrisch leitfähige Schicht wird bevorzugt mit gängigen Verfahren zur Schichtabscheidung von Metallen, beispielsweise durch Vakuumverfahren wie die magnetfeldunterstützte Kathodenzerstäubung aufgebracht.

Die elektrisch leitfähige Schicht weist bevorzugt eine Schichtdicke von 8 nm bis 25 nm, besonders bevorzugt von 13 nm bis 19 nm auf. Das ist besonders vorteilhaft im Hinblick auf die Transparenz, die Farbneutralität und den Flächenwiderstand der elektrisch leitfähigen Schicht.

Die Gesamtschichtdicke aller elektrisch leitfähigen Schichten beträgt bevorzugt von 40 nm bis 80 nm, besonders bevorzugt von 45 nm bis 60 nm. In diesem Bereich für die Gesamtdicke aller elektrisch leitfähigen Schichten wird bei für Fahrzeugscheiben, insbesondere Windschutzscheiben typischen Abständen h zwischen zwei Sammelleitern und einer Betriebsspannung U im Bereich von 12 V bis 15 V vorteilhaft eine ausreichend hohe spezifische Heizleistung P und gleichzeitig eine ausreichend hohe Transmission erreicht. Zudem weist die elektrisch leitfähige Beschichtung in diesem Bereich für die Gesamtdicke aller elektrisch leitfähigen Schichten besonders gute reflektierende Eigenschaften für den Infrarotbereich auf. Zu geringere Gesamtschichtdicken aller elektrisch leitfähigen Schichten ergeben einen zu hohen Flächenwiderstand R_{Quadrat} und damit eine zu geringe spezifische Heizleistung P sowie verringerte reflektierende Eigenschaften für den Infrarotbereich. Zu große Gesamtschichtdicken aller elektrisch leitfähigen Schichten verringern die Transmission durch die Scheibe zu stark, so dass die Erfordernisse an die Transmission von Fahrzeugscheiben nach ECE R 43 nicht erfüllt werden.

In einer vorteilhaften Ausgestaltung der Erfindung umfasst die erfindungsgemäße elektrisch leitfähige Beschichtung zumindest eine Glättungsschicht in zumindest einer der funktionellen Schichten. Die Glättungsschicht ist unterhalb einer der ersten Anpassungsschichten angeordnet, bevorzugt zwischen der Antireflexionsschicht und der ersten Anpassungsschicht zumindest einer funktionellen Schicht der erfindungsgemäßen elektrisch leitfähigen Beschichtung. Die Glättungsschicht steht besonders bevorzugt in direktem Kontakt zur ersten Anpassungsschicht. Die Glättungsschicht bewirkt eine Optimierung, insbesondere Glättung der Oberfläche für eine anschließend oberhalb aufgebrachte elektrisch leitfähige Schicht. Eine auf eine glattere Oberfläche abgeschiedene elektrisch leitfähige Schicht weist einen höheren Transmissionsgrad bei einem gleichzeitig niedrigeren Flächenwiderstand auf.

In einer besonders bevorzugten Ausgestaltung der Erfindung umfasst jede funktionelle Schicht der elektrisch leitfähigen Beschichtung eine Glättungsschicht, welche unterhalb der ersten Anpassungsschicht, bevorzugt zwischen Antireflexionsschicht und erster Anpassungsschicht angeordnet ist. Das ist besonders vorteilhaft im Hinblick auf den Transmissionsgrad der erfindungsgemäßen Scheibe und den Flächenwiderstand der elektrisch leitfähigen Beschichtung.

Die Glättungsschicht enthält bevorzugt zumindest ein nichtkristallines Oxid. Das Oxid kann amorph oder teilamorph (und damit teilkristallin) sein, ist aber nicht vollständig kristallin. Die nichtkristalline Glättungsschicht weist eine geringe Rauheit auf und bildet somit eine vorteilhaft glatte Oberfläche für die oberhalb der Glättungsschicht aufzubringenden Schichten. Die nichtkristalline Glättungsschicht bewirkt weiter eine verbesserte Oberflächenstruktur der direkt oberhalb der Glättungsschicht abgeschiedenen Schicht, welche bevorzugt die erste Anpassungsschicht ist. Die Glättungsschicht kann beispielsweise zumindest ein Oxid eines oder mehrerer der Elemente Zinn, Silizium, Titan, Zirkonium, Hafnium, Zink, Gallium und Indium enthalten.

Die Glättungsschicht enthält besonders bevorzugt ein nichtkristallines Mischoxid. Die Glättungsschicht enthält ganz besonders bevorzugt ein Zinn-Zink-Mischoxid. Das Mischoxid kann Dotierungen aufweisen. Die Glättungsschicht kann beispielsweise ein Antimon-dotiertes Zinn-Zink-Mischoxid enthalten. Das Mischoxid weist bevorzugt einen unterstöchiometrischen Sauerstoffgehalt auf. Ein Verfahren zur Herstellung von Zinn-Zink-Mischoxid-Schichten durch reaktive Kathodenzerstäubung ist beispielsweise aus DE 198 48 751 C1 bekannt. Das Zinn-Zink-Mischoxid wird bevorzugt mit einem Target abgeschieden, welches von 25 Gew. % bis 80 Gew. % Zink, von 20 Gew. % bis 75 Gew. % Zinn und von 0 Gew. % bis 10 Gew. % Antimon sowie herstellungsbedingte Beimengungen enthält. Das Target enthält besonders bevorzugt von 45 Gew. % bis 75 Gew. % Zink, von 25 Gew. % bis 55 Gew. % Zinn und von 1 Gew. % bis 5 Gew. % Antimon sowie herstellungsbedingte Beimengungen anderer Metalle. Die Abscheidung des Zinn-Zink-Mischoxids erfolgt unter Zugabe von Sauerstoff als Reaktionsgas während der Kathodenzerstäubung.

Die Schichtdicke einer Glättungsschicht beträgt bevorzugt von 3 nm bis 20 nm besonders bevorzugt von 4 nm bis 12 nm. Die Glättungsschicht weist bevorzugt einen Brechungsindex von kleiner als 2,2 auf.

In einer vorteilhaften Ausgestaltung der Erfindung umfasst jede funktionelle Schicht eine zweite Anpassungsschicht, welche oberhalb der elektrisch leitfähigen Schicht angeordnet ist. Das ist besonders vorteilhaft im Hinblick auf den Flächenwiderstand der elektrisch leitfähigen Beschichtung.

Die erste Anpassungsschicht und / oder die zweite Anpassungsschicht enthält bevorzugt Zinkoxid ZnO_{1-δ} mit 0 ≤ δ ≤ 0,01. Die erste Anpassungsschicht und / oder die zweite Anpassungsschicht enthält weiter bevorzugt Dotierungen. Die erste Anpassungsschicht und / oder die zweite Anpassungsschicht kann beispielsweise Aluminium-dotiertes Zinkoxid enthalten. Das Zinkoxid wird bevorzugt unterstöchiometrisch bezüglich des Sauerstoffs abgeschieden um eine Reaktion von überschüssigem Sauerstoff mit der silberhaltigen Schicht zu vermeiden. Die Zinkoxid-Schicht wird bevorzugt durch magnetfeldunterstützte Kathodenzerstäubung abgeschieden. Das Target enthält bevorzugt von 85 Gew. % bis 100 Gew. % Zinkoxid und von 0 Gew. % bis 15 Gew. % Aluminium sowie herstellungsbedingte Beimengungen. Das Target enthält besonders bevorzugt von 90 Gew. % bis 95 Gew. % Zinkoxid und von 5 Gew. % bis 10 Gew. % Aluminium sowie herstellungsbedingte Beimengungen. Das Target enthält alternativ bevorzugt von 95 Gew.-% bis 99 Gew.-% Zink und von 1 Gew.-% bis 5 Gew.-% Aluminium, wobei die Abscheidung der Schichten unter Zugabe von Sauerstoff als Reaktionsgas erfolgt. Die Schichtdicken der ersten Anpassungsschicht und der zweiten Anpassungsschicht betragen bevorzugt von 3 nm bis 20 nm besonders bevorzugt von 4 nm bis 12 nm.

In einer bevorzugten Ausgestaltung der Erfindung ist oberhalb der obersten funktionellen Schicht eine weitere Antireflexionsschicht aufgebracht. Die weitere Antireflexionsschicht verbessert die optischen Eigenschaften der elektrisch leitfähigen Beschichtung und schützt zudem die darunterliegenden Schichten vor Korrosion. Die oberste Antireflexionsschicht ist dann im Sinne der Erfindung die Antireflexionsschicht, welche oberhalb der funktionellen Schichten angeordnet ist. Die unterste Antireflexionsschicht ist im Sinne der Erfindung die Antireflexionsschicht, welche den geringsten Abstand zum transparenten Substrat aufweist. Die unterste Antireflexionsschicht ist die Antireflexionsschicht der untersten funktionellen Schicht. Die oberste und die unterste Antireflexionsschicht sind nicht zwischen zwei elektrisch leitfähigen Schichten angeordnet. Die oberste und / oder die unterste Antireflexionsschicht ist bevorzugt als Schicht eines optisch hochbrechenden Materials mit einen Brechungsindex größer oder gleich 2,1 ausgestaltet. Die oberste und / oder die unterste Antireflexionsschicht enthält besonders bevorzugt zumindest ein Silizium-Zirkonium-Mischnitrid, wie ein Aluminium-dotiertes Silizium-Zirkonium-Mischnitrid. Das ist besonders vorteilhaft im Hinblick auf die optischen Eigenschaften der erfindungsgemäßen transparenten Scheibe. Die oberste und / oder die unterste Antireflexionsschicht kann aber auch ein dielektrisches Material mit einem Brechungsindex kleiner 2,1 enthalten, beispielsweise Siliziumnitrid oder Zinnoxid. Die oberste und / oder die unterste Antireflexionsschicht kann beispielsweise auch jeweils eine Schicht eines optisch hochbrechenden Materials und eine Schicht eines dielektrischen Materials mit einem Brechungsindex kleiner 2,1 umfassen. Die Schichtdicke der obersten und der untersten Antireflexionsschicht beträgt bevorzugt von 20 nm bis 40 nm. Damit werden besonders gute Ergebnisse erzielt.

In einer vorteilhaften Ausgestaltung der erfindungsgemäßen transparenten Scheibe umfasst zumindest eine funktionelle Schicht zumindest eine Blockerschicht. Die Blockerschicht steht in direktem Kontakt zur elektrisch leitfähigen Schicht und ist unmittelbar oberhalb oder unmittelbar unterhalb der elektrisch leitfähigen Schicht angeordnet. Zwischen der elektrisch leitfähigen Schicht und der Blockerschicht ist also keine weitere Schicht angeordnet. Die funktionelle Schicht kann auch zwei Blockerschichten umfassen, wobei bevorzugt eine Blockerschicht unmittelbar oberhalb und eine Blockerschicht unmittelbar unterhalb der elektrisch leitfähigen Schicht angeordnet ist. Besonders bevorzugt umfasst jede funktionelle Schicht zumindest eine solche Blockerschicht. Die Blockerschicht enthält bevorzugt Niob, Titan, Nickel, Chrom und / oder Legierungen davon, besonders bevorzugt Nickel-Chrom-Legierungen. Die Schichtdicke der Blockerschicht beträgt bevorzugt von 0,1 nm bis 5 nm, besonders bevorzugt von 0,1 nm bis 2 nm. Damit werden besonders gute Ergebnisse erzielt. Eine Blockerschicht unmittelbar unterhalb der elektrisch leitfähigen Schicht dient insbesondere zur Stabilisierung der elektrisch leitfähigen Schicht während einer Temperaturbehandlung und verbessert die optische Qualität der elektrisch leitfähigen Beschichtung. Eine Blockerschicht unmittelbar oberhalb der elektrisch leitfähigen Schicht verhindert den Kontakt der empfindlichen elektrisch leitfähigen Schicht mit der oxidierenden reaktiven Atmosphäre während der Abscheidung der folgenden Schicht durch reaktive Kathodenzerstäubung, beispielsweise der zweiten Anpassungsschicht, welche bevorzugt Zinkoxid enthält.

Das transparente Substrat enthält bevorzugt Glas, besonders bevorzugt Flachglas, Floatglas, Quarzglas, Borosilikatglas, Kalk-Natron-Glas oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und / oder Gemische davon. Beispiele geeigneter Gläser sind aus DE 697 31 268 T2, Seite 8, Absatz [0053], bekannt.

Die Dicke des transparenten Substrats kann breit variieren und so hervorragend den Erfordernissen im Einzelfall angepasst werden. Vorzugsweise werden Scheiben mit den Standardstärken von 1,0 mm bis 25 mm und bevorzugt von 1,4 mm bis 2,6 mm verwendet. Die Größe des transparenten Substrats kann breit variieren und richtet sich nach der erfindungsgemäßen Verwendung. Das transparente Substrat weist beispielsweise im Fahrzeugbau und Architekturbereich übliche Flächen von 200 cm² bis zu 4 m² auf.

Das transparente Substrat kann eine beliebige dreidimensionale Form aufweisen. Vorzugsweise hat die dreidimensionale Form keine Schattenzonen, so dass sie beispielsweise durch Kathodenzerstäubung beschichtet werden kann. Das transparente Substrat ist bevorzugt plan oder leicht oder stark in einer Richtung oder in mehreren Richtungen des Raumes gebogen. Das transparente Substrat kann farblos oder gefärbt sein.

In einer vorteilhaften Ausgestaltung der Erfindung enthält die elektrisch leitfähige Beschichtung zwei bis vier, insbesondere drei funktionelle Schichten. Damit werden besonders gute Ergebnisse erzielt im Hinblick auf den Flächenwiderstand der elektrisch leitfähigen Beschichtung sowie die optischen Eigenschaften und eine kostengünstige Herstellung der transparenten Scheibe.

In einer vorteilhaften Ausgestaltung der Erfindung ist das transparente Substrat über zumindest eine thermoplastische Zwischenschicht mit einer zweiten Scheibe zu einer Verbundscheibe verbunden. Die erfindungsgemäße elektrisch leitfähige Beschichtung ist bevorzugt auf die der thermoplastischen Zwischenschicht zugewandten Oberfläche des transparenten Substrats aufgebracht. Dadurch wird die elektrisch leitfähige Beschichtung vorteilhaft vor Beschädigungen und Korrosion geschützt.

Die Verbundscheibe weist bevorzugt eine Gesamttransmission von größer 70 % auf.

Die thermoplastische Zwischenschicht enthält bevorzugt thermoplastische Kunststoffe, beispielsweise Polyvinylbutyral (PVB), Ethylenvinylacetat (EVA), Polyurethan (PU), Polyethylenterephthalat (PET) oder mehrere Schichten davon, bevorzugt mit Dicken von 0,3 mm bis 0,9 mm.

Die zweite Scheibe enthält bevorzugt Glas, besonders bevorzugt Flachglas, Floatglas, Quarzglas, Borosilikatglas, Kalk-Natron-Glas oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und / oder Gemische davon. Die zweite Scheibe weist bevorzugt eine Dicke von 1,0 mm bis 25 mm und besonders bevorzugt von 1,4 mm bis 2,6 mm auf.

Die elektrisch leitfähige Beschichtung erstreckt sich bevorzugt über die gesamte Oberfläche des transparenten Substrats, abzüglich eines umlaufenden rahmenförmigen beschichtungsfreien Bereichs mit einer Breite von 2 mm bis 20 mm, bevorzugt von 5 mm bis 10 mm. Der beschichtungsfreie Bereich wird bevorzugt durch die thermoplastische Zwischenschicht oder einen Acrylatkleber als Dampfdiffusionssperre hermetisch versiegelt. Durch die Dampfdiffusionssperre wird die korrosionsempfindliche elektrisch leitfähige Beschichtung vor Feuchtigkeit und Luftsauerstoff geschützt. Ist die Verbundscheibe als Fahrzeugscheibe, beispielsweise als Windschutzscheibe vorgesehen und wird die elektrisch leitfähige Beschichtung als elektrisch beheizbare Beschichtung verwendet, so bewirkt der umlaufende beschichtungsfreie Bereich zudem eine elektrische Isolierung zwischen der spannungsführenden Beschichtung und der Fahrzeugkarosserie.

Das transparente Substrat kann in einem oder mehreren weiteren Bereichen beschichtungsfrei sein. Solche Bereiche können beispielsweise als Datenübertragungsfenster oder Kommunikationsfenster dienen. Die transparente Scheibe ist in dem weiteren beschichtungsfreien Bereich für elektromagnetische und insbesondere infrarote Strahlung durchlässig.

Die elektrisch leitfähige Beschichtung kann direkt auf der Oberfläche des transparenten Substrats aufgebracht sein. Alternativ kann die elektrisch leitfähige Beschichtung auf eine Trägerfolie aufgebracht sein, die zwischen zwei Zwischenschichten eingebettet ist. Die Trägerfolie enthält bevorzugt ein thermoplastisches Polymer, insbesondere Polyvinylbutyral (PVB), Ethylenvinylacetat (EVA), Polyurethan (PU), Polyethylenterephthalat (PET) oder Kombinationen davon.

Das transparente Substrat kann beispielsweise auch mit einer zweiten Scheibe über Abstandshalter zu einer Isolierverglasung verbunden sein. Das transparente Substrat kann auch mit mehr als einer weiteren Scheibe über thermoplastische Zwischenschichten und / oder Abstandshalter verbunden sein. Ist das transparente Substrat mit einer oder mit mehreren weiteren Scheiben verbunden, so kann eine oder mehrere dieser weiteren Scheiben ebenfalls eine elektrisch leitfähige Beschichtung aufweisen.

In einer bevorzugten Ausgestaltung ist die erfindungsgemäße elektrisch leitfähige Beschichtung eine elektrisch beheizbare Beschichtung. Die elektrisch leitfähige Beschichtung ist dabei geeignet elektrisch kontaktiert.

In einer weiteren bevorzugten Ausgestaltung ist die erfindungsgemäße elektrisch leitfähige Beschichtung eine Beschichtung mit reflektierenden Eigenschaften für den Infrarotbereich. Die elektrisch leitfähige Beschichtung muss dazu nicht elektrisch kontaktiert sein. Als Beschichtung mit reflektierenden Eigenschaften für den Infrarotbereich ist im Sinne der Erfindung insbesondere eine Beschichtung zu verstehen, welche einen Reflexionsgrad von mindestens 20 % im Wellenlängenbereich von 1000 nm bis 1600 nm aufweist. Bevorzugt weist die erfindungsgemäße elektrisch leitfähige Beschichtung einen Reflexionsgrad von größer oder gleich 50 % im Wellenlängenbereich von 1000 nm bis 1600 nm auf.

In einer vorteilhaften Ausgestaltung der Erfindung ist die elektrisch leitfähige Beschichtung über Sammelleiter mit einer Spannungsquelle verbunden und eine an die elektrisch leitfähige Beschichtung angelegte Spannung weist bevorzugt einen Wert von 12 V bis 15 V auf. Die Sammelleiter, sogenannte Busbars, dienen der Übertragung elektrischer Leistung. Beispiele geeigneter Sammelleiter sind aus DE 103 33 618 B3 und EP 0 025 755 B1 bekannt.

Die Sammelleiter werden vorteilhaft durch Aufdrucken einer leitfähigen Paste hergestellt. Wird das transparente Substrat nach Aufbringen der elektrisch leitfähigen Beschichtung gebogen, so wird die leitfähige Paste bevorzugt vor dem Biegen und / oder beim Biegen des transparenten Substrats eingebrannt. Die leitfähige Paste enthält bevorzugt Silber-Partikel und Glasfritten. Die Schichtdicke der eingebrannten leitfähigen Paste beträgt bevorzugt von 5 µm bis 20 µm.

In einer alternativen Ausgestaltung werden dünne und schmale Metallfolienstreifen oder Metalldrähte als Sammelleiter verwendet, die bevorzugt Kupfer und / oder Aluminium enthalten, insbesondere werden Kupferfolienstreifen mit einer Dicke von bevorzugt 10 µm bis 200 µm, beispielsweise etwa 50 µm verwendet. Die Breite der Kupferfolienstreifen beträgt bevorzugt 1 mm bis 10 mm. Der elektrische Kontakt zwischen elektrisch leitfähiger Beschichtung und Sammelleiter kann beispielsweise durch Auflöten oder Kleben mit einem elektrisch leitfähigen Kleber hergestellt werden. Ist das transparente Substrat Teil eines Verbundglases, so können die Metallfolienstreifen oder Metalldrähte beim Zusammenlegen der Verbundschichten auf die elektrisch leitfähige Beschichtung aufgelegt werden. Im späteren Autoklavprozess wird durch Einwirkung von Wärme und Druck ein sicherer elektrischer Kontakt zwischen den Sammelleitern und der Beschichtung erreicht.

Als Zuleitung zur Kontaktierung von Sammelleitern im Innern von Verbundscheiben werden im Fahrzeugbereich üblicherweise Folienleiter verwendet. Beispiele für Folienleiter werden in DE 42 35 063 A1, DE 20 2004 019 286 U1 und DE 93 13 394 U1 beschrieben.

Flexible Folienleiter, mitunter auch Flachleiter oder Flachbandleiter genannt, bestehen bevorzugt aus einem verzinnten Kupferband mit einer Dicke von 0,03 mm bis 0,1 mm und einer Breite von 2 mm bis 16 mm. Kupfer hat sich für solche Leiterbahnen bewährt, da es eine gute elektrische Leitfähigkeit sowie eine gute Verarbeitbarkeit zu Folien besitzt. Gleichzeitig sind die Materialkosten niedrig. Es können auch andere elektrisch leitende Materialien verwendet werden, die sich zu Folien verarbeiten lassen. Beispiele hierfür sind Aluminium, Gold, Silber oder Zinn und Legierungen davon.

Das verzinnte Kupferband ist zur elektrischen Isolation und zur Stabilisierung auf ein Trägermaterial aus Kunststoff aufgebracht oder beidseitig mit diesem laminiert. Das Isolationsmaterial enthält in der Regel eine 0,025 mm bis 0,05 mm dicken Folie auf Polyimid-Basis. Andere Kunststoffe oder Materialien mit den erforderlichen isolierenden Eigenschaften können ebenfalls verwendet werden. In einem Folienleiterband können sich mehrere voneinander elektrisch isolierte, leitfähige Schichten befinden.

Folienleiter, die sich zur Kontaktierung von elektrisch leitfähigen Schichten in Verbundscheiben eignen, weisen lediglich eine Gesamtdicke von 0,3 mm auf. Derart dünne Folienleiter können ohne Schwierigkeiten zwischen den einzelnen Scheiben in der thermoplastischen Zwischenschicht eingebettet werden.

Alternativ können auch dünne Metalldrähte als Zuleitung verwendet werden. Die Metalldrähte enthalten insbesondere Kupfer, Wolfram, Gold, Silber oder Aluminium oder Legierungen mindestens zweier dieser Metalle. Die Legierungen können auch Molybdän, Rhenium, Osmium, Iridium, Palladium oder Platin enthalten.

Die Erfindung umfasst weiter ein Verfahren zur Herstellung einer transparenten Scheibe mit elektrisch leitfähiger Beschichtung, wobei zumindest zwei funktionelle Schichten nacheinander auf ein transparentes Substrat aufgebracht werden und zum Aufbringen jeder funktionellen Schicht nacheinander mindestens
(a) eine Antireflexionsschicht,
(b) eine erste Anpassungsschicht und
(c) eine elektrisch leitfähige Schicht
aufgebracht werden und wobei zum Aufbringen zumindest einer Antireflexionsschicht mindestens
- eine Schicht eines dielektrischen Materials mit einem Brechungsindex kleiner 2,1 und
- eine Schicht eines optisch hochbrechenden Materials mit einem Brechungsindex größer oder gleich 2,1
aufgebracht werden.

In einer vorteilhaften Ausführung wird nach dem Aufbringen der elektrisch leitfähigen Schicht eine zweite Anpassungsschicht aufgebracht.

In einer vorteilhaften Ausführung der Erfindung wird vor dem Aufbringen zumindest einer ersten Anpassungsschicht eine Glättungsschicht aufgebracht. In einer weiteren vorteilhaften Ausführung der Erfindung wird vor oder nach dem Aufbringen zumindest einer elektrisch leitfähigen Schicht eine Blockerschicht aufgebracht.

In einer vorteilhaften Ausführung der Erfindung wird nach dem Aufbringen der obersten funktionellen Schicht eine weitere Antireflexionsschicht aufgebracht.

Die einzelnen Schichten werden durch an sich bekannte Verfahren, beispielsweise durch magnetfeldunterstützte Kathodenzerstäubung abgeschieden. Die Kathodenzerstäubung erfolgt in einer Schutzgasatmosphäre, beispielsweise aus Argon, beziehungsweise in einer Reaktivgasatmosphäre, beispielsweise durch Zugabe von Sauerstoff oder Stickstoff.

Die Schichtdicken der einzelnen Schichten mit den gewünschten Eigenschaften hinsichtlich Transmission, Flächenwiderstand und Farbwerten ergeben sich für den Fachmann in einfacher Weise durch Simulationen im Bereich der oben angegebenen Schichtdicken.

In einer vorteilhaften Ausführung der Erfindung wird das transparente Substrat und eine zweite Scheibe auf eine Temperatur von 500°C bis 700°C erhitzt und das transparente Substrat und die zweite Scheibe mit einer thermoplastischen Zwischenschicht flächendeckend verbunden. Das Erhitzen der Scheibe kann im Rahmen eines Biegeprozesses erfolgen. Die elektrisch leitfähige Beschichtung muss insbesondere geeignet sein, den Biegeprozess und / oder den Verbundprozess ohne Beschädigungen zu überstehen. Die Eigenschaften, insbesondere der Flächenwiderstand der oben beschriebenen elektrisch leitfähigen Beschichtung verbessern sich regelmäßig durch die Erhitzung.

Die elektrisch leitfähige Beschichtung kann vor dem Erhitzen des Substrats mit mindestens zwei Sammelleitern verbunden werden.

Die Erfindung umfasst weiter die Verwendung der erfindungsgemäßen transparenten Scheibe als Scheibe oder als Bestandteil einer Scheibe, insbesondere als Bestandteil einer Isolierverglasung oder einer Verbundscheibe, in Gebäuden oder in Fortbewegungsmitteln für den Verkehr auf dem Lande, in der Luft oder zu Wasser, insbesondere in Kraftfahrzeugen beispielsweise als Windschutzscheibe, Heckscheibe, Seitenscheibe und / oder Dachscheibe oder als Bestandteil einer Windschutzscheibe, Heckscheibe, Seitenscheibe und / oder Dachscheibe, insbesondere zur Beheizung einer Scheibe und / oder zur Verminderung der Aufheizung eines Innenraums. Die erfindungsgemäße Scheibe wird dabei insbesondere als Scheibe mit reflektierenden Eigenschaften für den Infrarotbereich und / oder als elektrisch beheizbare Scheibe verwendet.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: einen Querschnitt durch eine erste Ausgestaltung der erfindungsgemäßen transparenten Scheibe mit elektrisch leitfähiger Beschichtung,
- Fig. 2: einen Querschnitt durch eine weitere Ausgestaltung der erfindungsgemäßen transparenten Scheibe mit elektrisch leitfähiger Beschichtung,
- Fig. 3: eine Draufsicht auf eine erfindungsgemäße transparente Scheibe als Teil einer Verbundscheibe,
- Fig. 4: einen Schnitt A-A' durch die Verbundscheibe gemäß Figur 3 und
- Fig. 5: ein detailliertes Flussdiagramm einer Ausführungsform des erfindungsgemäßen Verfahrens.

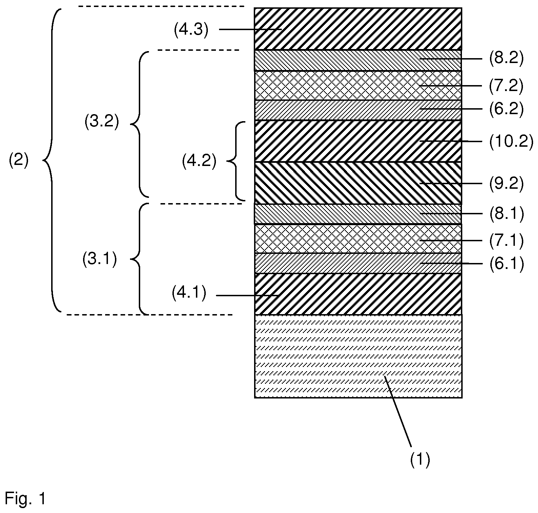

Fig. 1 zeigt einen Querschnitt durch eine Ausgestaltung der erfindungsgemäßen transparenten Scheibe mit dem transparenten Substrat 1 und der elektrisch leitfähigen Beschichtung 2. Das Substrat 1 enthält Floatglas und weist eine Dicke von 2,1 mm auf. Die elektrisch leitfähige Beschichtung 2 umfasst zwei funktionelle Schichten 3 (3.1 und 3.2), die flächendeckend übereinander angeordnet sind. Jede funktionelle Schicht 3 umfasst
- eine Antireflexionsschicht 4 (4.1 und 4.2),
- eine erste Anpassungsschicht 6 (6.1 und 6.2)
- eine elektrisch leitfähige Schicht 7 (7.1 und 7.2),
- eine zweite Anpassungsschicht 8 (8.1 und 8.2).

Die Schichten sind in der angegebenen Reihenfolge mit wachsendem Abstand zum transparenten Substrat 1 angeordnet. Oberhalb der obersten funktionellen Schicht 3.2 ist eine weitere Antireflexionsschicht 4.3 angeordnet. Die ersten Anpassungsschichten 6 sowie die zweiten Anpassungsschichten 8 enthalten Aluminium-dotiertes Zinkoxid (ZnO:Al) und weisen Schichtdicken von 5 nm bis 10 nm auf. Die elektrisch leitfähigen Schichten 7 enthalten Silber und weisen Schichtdicken von 15 nm bis 16 nm auf. Die unterste Antireflexionsschicht 4.1 sowie die oberste Antireflexionsschicht 4.3 enthalten Aluminium-dotiertes Silizium-Zirkonium-Mischnitrid (SiZrNₓ:Al) und weisen Schichtdicken von 28 nm bis 40 nm auf.

Die Antireflexionsschicht 4.2 ist zwischen den elektrisch leitfähigen Schichten 7.1 und 7.2 angeordnet. Die Antireflexionsschicht 4.2 umfasst eine Schicht eines dielektrischen Materials 9.2 mit einem Brechungsindex kleiner 2,1 und eine Schicht eines optisch hochbrechenden Materials 10.2. Die Schicht eines dielektrischen Materials 9.2 enthält Siliziumnitrid und weist eine Schichtdicke von 46 nm auf. Die Schicht eines optisch hochbrechenden Materials 10.2 enthält Aluminium-dotiertes Silizium-Zirkonium-Mischnitrid (SiZrNₓ:Al) und weist eine Schichtdicke von 23 nm auf.

Durch die erfindungsgemäße Ausgestaltung der zwischen zwei elektrisch leitfähigen Schichten 7.1, 7.2 angeordneten Antireflexionsschicht 4.2 wird vorteilhaft eine Verringerung des Flächenwiderstands der elektrisch leitfähigen Beschichtung 2 erreicht.

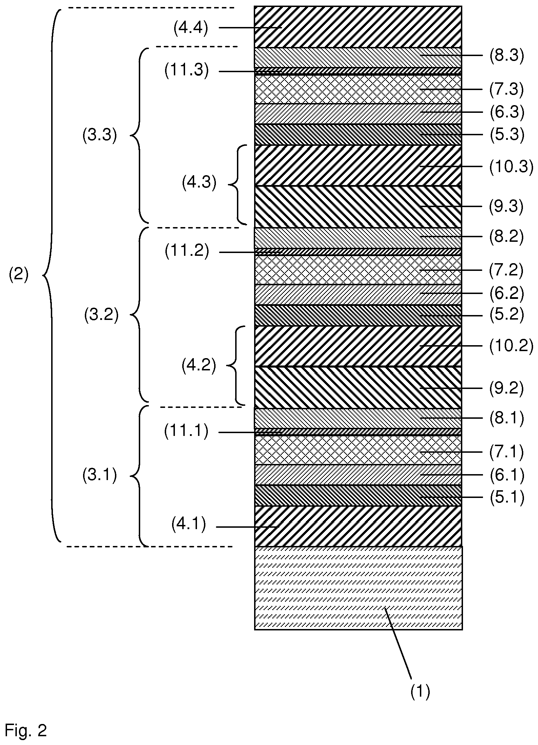

Fig. 2 zeigt einen Querschnitt durch eine weitere Ausgestaltung der erfindungsgemäßen transparenten Scheibe mit dem transparenten Substrat 1 und der elektrisch leitfähigen Beschichtung 2. Das Substrat 1 enthält Floatglas und weist eine Dicke von 2,1 mm auf. Die elektrisch leitfähige Beschichtung 2 umfasst drei funktionelle Schichten 3 (3.1, 3.2 und 3.3), die flächendeckend übereinander angeordnet sind. Jede funktionelle Schicht 3 umfasst
- eine Antireflexionsschicht 4 (4.1, 4.2 und 4.3),
- eine Glättungsschicht 5 (5.1, 5.2 und 5.3),
- eine erste Anpassungsschicht 6 (6.1, 6.2 und 6.3)
- eine elektrisch leitfähige Schicht 7 (7.1, 7.2 und 7.3),
- eine Blockerschicht 11 (11.1, 11.2 und 11.3) und
- eine zweite Anpassungsschicht 8 (8.1, 8.2 und 8.3).

Die Schichten sind in der angegebenen Reihenfolge mit wachsendem Abstand zum transparenten Substrat 1 angeordnet. Oberhalb der obersten funktionellen Schicht 3.3 ist eine weitere Antireflexionsschicht 4.4 angeordnet. Die Glättungsschichten 5 enthalten Antimon-dotiertes Zinn-Zink-Mischoxid (SnZnOₓ:Sb) und weisen Schichtdicken von 6 nm auf. Die ersten Anpassungsschichten 6 sowie die zweiten Anpassungsschichten 8 enthalten Aluminium-dotiertes Zinkoxid (ZnO:Al) und weisen Schichtdicken von 5 nm bis 10 nm auf. Die elektrisch leitfähigen Schichten 7 enthalten Silber und weisen Schichtdicken von 15 nm bis 16 nm auf. Die unterste Antireflexionsschicht 4.1 sowie die oberste Antireflexionsschicht 4.4 enthalten Aluminium-dotiertes Silizium-Zirkonium-Mischnitrid (SiZrNₓ:Al) und weisen Schichtdicken von 28 nm bis 40 nm auf.

Die Antireflexionsschicht 4.2 ist zwischen den elektrisch leitfähigen Schichten 7.1 und 7.2 angeordnet. Die Antireflexionsschicht 4.3 ist zwischen den elektrisch leitfähigen Schichten 7.2 und 7.3 angeordnet. Die Antireflexionsschichten 4.2 und 4.3 umfassen jeweils eine Schicht eines dielektrischen Materials 9 (9.2 und 9.3) mit einem Brechungsindex kleiner 2,1 und eine Schicht eines optisch hochbrechenden Materials 10 (10.2 und 10.3). Die Schichten eines dielektrischen Materials 9 enthalten Siliziumnitrid und weisen Schichtdicken von 39 nm bis 42 nm auf. Die Schichten eines optisch hochbrechenden Materials 10 enthalten Aluminium-dotiertes Silizium-Zirkonium-Mischnitrid (SiZrNₓ:Al) und weisen Schichtdicken von 20 nm bis 21 nm auf.

Die Dicke der Schichten eines optisch hochbrechenden Materials 10.2, 10.3 beträgt von 33 % bis 67 % der Dicke derjenigen Antireflexionsschicht 4.2 oder 4.3, welche die jeweilige Schicht eines optisch hochbrechenden Materials 10.2 oder 10.3 umfasst.

Die einzelnen Schichten der elektrisch leitfähigen Beschichtung 2 wurden durch Kathodenstrahlzerstäubung abgeschieden. Das Target zur Abscheidung der Anpassungsschichten 6, 8 enthielt 92 Gew. % Zinkoxid (ZnO) und 8 Gew. % Aluminium. Das Target zur Abscheidung der Glättungsschichten 5 enthielt 68 Gew. % Zinn, 30 Gew. % Zink und 2 Gew. % Antimon. Die Abscheidung erfolgte unter Zugabe von Sauerstoff als Reaktionsgas während der Kathodenzerstäubung. Das Target zur Abscheidung der Schichten eines optisch hochbrechenden Materials 10 sowie der obersten und untersten Antireflexionsschicht 4.1, 4.4 enthielt 52,9 Gew. % Silizium, 43,8 Gew. % Zirkonium und 3,3 Gew. % Aluminium. Die Abscheidung erfolgte unter Zugabe von Stickstoff als Reaktionsgas während der Kathodenzerstäubung.

Durch die erfindungsgemäße Ausgestaltung der zwischen zwei elektrisch leitfähigen Schichten 7 angeordneten Antireflexionsschichten 4.2, 4.3 wird eine Verringerung des Flächenwiderstands der elektrisch leitfähigen Beschichtung 2 erreicht. Die Glättungsschichten 5 führen zu einer weiteren Verringerung des Flächenwiderstands und einer Verbesserung der Transmission. Durch die Blockerschichten 11 schützen die elektrisch leitfähigen Schichten 7 während der Abscheidung der folgenden Schicht durch reaktive Kathodenzerstäubung.

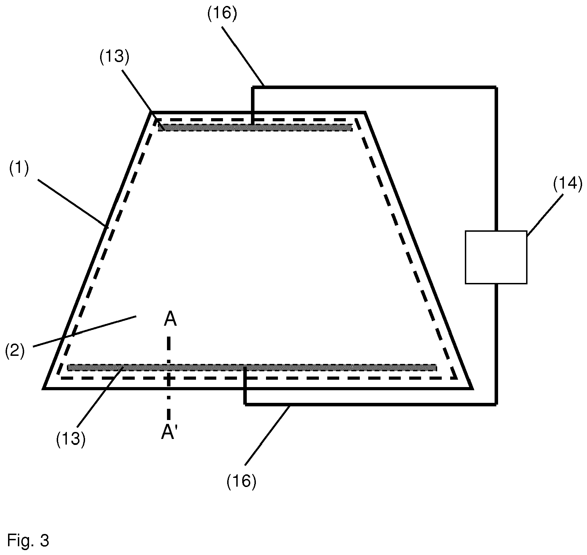

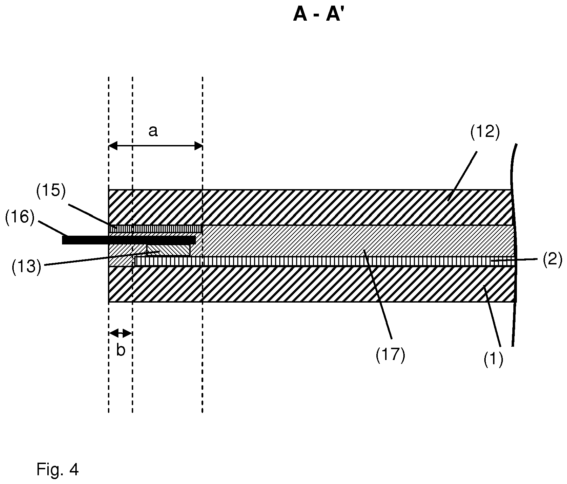

Fig. 3 und Fig. 4 zeigen je ein Detail einer erfindungsgemäßen transparenten Scheibe als Teil einer Verbundscheibe. Die Verbundscheibe ist als Windschutzscheibe eines Personenkraftwagens vorgesehen. Das transparente Substrat 1 ist über eine thermoplastische Zwischenschicht 17 mit einer zweiten Scheibe 12 verbunden. Figur 3 zeigt eine Draufsicht auf die von der thermoplastischen Zwischenschicht abgewandte Oberfläche des transparenten Substrats 1. Das transparente Substrat 1 ist die dem Innenraum des Personenkraftwagens zugewandte Scheibe. Das transparente Substrat 1 und die zweite Scheibe 12 enthalten Floatglas und weisen eine Dicke von jeweils 2,1 mm auf. Die thermoplastische Zwischenschicht 17 enthält Polyvinylbutyral (PVB) und weist eine Dicke von 0,76 mm auf.

Auf die zur thermoplastischen Zwischenschicht 17 hingewandte Oberfläche des transparenten Substrats 1 ist eine elektrisch leitfähige Beschichtung 2 aufgebracht. Die elektrisch leitfähige Beschichtung 2 ist eine elektrisch beheizbare Beschichtung und ist dazu elektrisch kontaktiert. Die elektrisch leitfähige Beschichtung 2 erstreckt sich über die gesamte Oberfläche des transparenten Substrats 1 abzüglich eines umlaufenden rahmenförmigen beschichtungsfreien Bereichs mit einer Breite b von 8 mm. Der beschichtungsfreie Bereich dient der elektrischen Isolierung zwischen der spannungsführenden elektrisch leitfähigen Beschichtung 2 und der Fahrzeugkarosserie. Der beschichtungsfreie Bereich ist durch Verkleben mit der Zwischenschicht 17 hermetisch versiegelt, um die elektrisch leitfähige Beschichtung 2 vor Beschädigungen und Korrosion zu schützen.

Am äußeren oberen und unteren Rand des transparenten Substrats 1 ist zur elektrischen Kontaktierung der elektrisch leitfähigen Beschichtung 2 jeweils ein Sammelleiter 13 angeordnet. Die Sammelleiter 13 wurden mittels einer leitfähigen Silberpaste auf die elektrisch leitfähige Beschichtung 2 aufgedruckt und eingebrannt. Die Schichtdicke der eingebrannten Silber-Paste beträgt 15 µm. Die Sammelleiter 13 sind elektrisch leitend mit den darunterliegenden Bereichen der elektrisch leitfähigen Beschichtung 2 verbunden.

Die Zuleitungen 16 bestehen aus verzinnten Kupferfolien mit einer Breite von 10 mm und einer Dicke von 0,3 mm. Jede Zuleitung 16 ist jeweils mit einem der Sammelleiter 13 verlötet. Die elektrisch leitfähige Beschichtung 2 ist über die Sammelleiter 13 und die Zuleitungen 16 mit einer Spannungsquelle 14 verbunden. Die Spannungsquelle 14 ist die Bordspannung von 14 V eines Kraftfahrzeugs.

Auf der zweiten Scheibe 12 ist am Rand der zur thermoplastischen Zwischenschicht 17 hingewandten Oberfläche eine opake Farbschicht mit einer Breite a von 20 mm als Abdeckdruck 15 rahmenförmig aufgebracht. Der Abdeckdruck 15 verdeckt die Sicht auf den Klebestrang, mit dem die Verbundscheibe in die Fahrzeugkarosserie eingeklebt wird. Der Abdeckdruck 15 dient gleichzeitig als Schutz des Klebers vor UV-Strahlung und damit als Schutz vor vorzeitiger Alterung des Klebers. Des Weiteren werden die Sammelleiter 13 und die Zuleitungen 16 durch den Abdeckdruck 15 verdeckt.

Fig. 4 zeigt einen Schnitt entlang A-A' durch die Verbundscheibe gemäß Figur 3 im Bereich der unteren Kante. Zu sehen ist das transparente Substrat 1 mit der elektrisch beheizbaren Beschichtung 2, die zweite Scheibe 12, die thermoplastische Zwischenschicht 17, ein Sammelleiter 13, eine Zuleitung 16 sowie der Abdeckdruck 15.

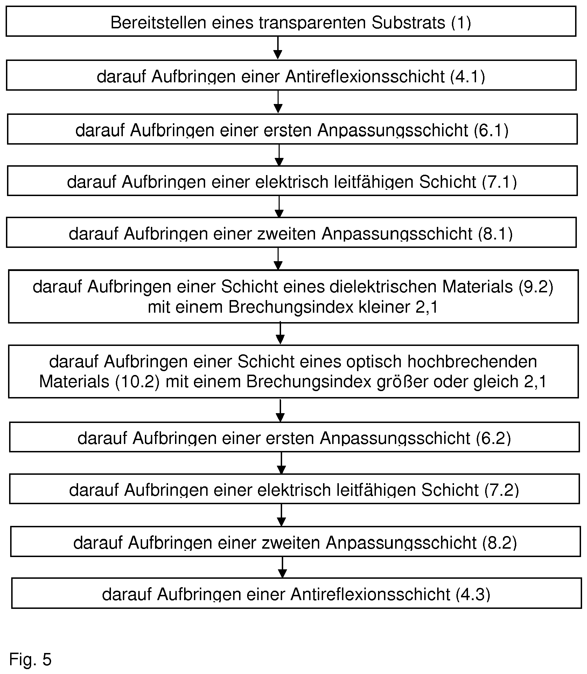

Fig. 5 zeigt ein Flussdiagramm eines Ausführungsbeispiels des erfindungsgemäßen Verfahrens zur Herstellung einer transparenten Scheibe mit elektrisch leitfähiger Beschichtung (2).

### Beispiele

Es wurden erfindungsgemäße transparente Scheiben mit elektrisch leitfähiger Beschichtung hergestellt. Nach der Beschichtung der transparenten Substrate 1 wurde der Flächenwiderstand der elektrisch leitfähigen Beschichtung 2 bestimmt. Die mit der elektrisch leitfähigen Beschichtung 2 versehenen transparenten Substrate 1 wurden anschließend bei einer Temperatur von etwa 650° C gebogen. Der Biegeprozess dauerte etwa 10 min. Anschließend wurde jedes transparente Substrat 1 mit einer ebenfalls gebogenen zweiten Scheibe 12 über eine thermoplastische Zwischenschicht 17 bei einer Temperatur von etwa 140°C und einem Druck von etwa 12 bar laminiert. Die elektrisch leitfähige Beschichtung 2 war dabei zur thermoplastischen Zwischenschicht 17 hingewandt angeordnet.

Die elektrisch leitfähige Beschichtung 2 umfasste jeweils drei funktionelle Schichten 3. Die genaue Schichtfolge mit Schichtdicken und Materialen der Beispiele 1 bis 3 ist in Tabelle 1 dargestellt.

In Beispiel 1 umfasste die Antireflexionsschicht 4.2 eine Schicht eines dielektrischen Materials 9.2 mit einem Brechungsindex kleiner 2,1 und eine Schicht eines optisch hochbrechenden Materials 10.2. Die Dicke der Schicht eines optisch hochbrechenden Materials 10.2 betrug 33,3 % der Dicke der Antireflexionsschicht 4.2. Die Antireflexionsschicht 4.3 umfasste nur eine Schicht eines dielektrischen Materials 9.3. Nur die unterste funktionelle Schicht 3.1 wies eine Glättungsschicht 5.1 auf. Oberhalb jeder elektrisch leitfähigen Schicht 7 war eine Blockerschicht 11 angeordnet.

In Beispiel 2 umfasste die Antireflexionsschicht 4.2 eine Schicht eines dielektrischen Materials 9.2 mit einem Brechungsindex kleiner 2,1 und eine Schicht eines optisch hochbrechenden Materials 10.2. Die Dicke der Schicht eines optisch hochbrechenden Materials 10.2 betrug 66,7 % der Dicke der Antireflexionsschicht 4.2. Die Antireflexionsschicht 4.3 umfasste nur eine Schicht eines dielektrischen Materials 9.3. Nur die unterste funktionelle Schicht 3.1 wies eine Glättungsschicht 5.1 auf. Oberhalb jeder elektrisch leitfähigen Schicht 7 war eine Blockerschicht 11 angeordnet.

In Beispiel 3 umfasste die Antireflexionsschicht 4.2 eine Schicht eines dielektrischen Materials 9.2 mit einem Brechungsindex kleiner 2,1 und eine Schicht eines optisch hochbrechenden Materials 10.2. Die Dicke der Schicht eines optisch hochbrechenden Materials 10.2 betrug 33,3 % der Dicke der Antireflexionsschicht 4.2. Die Antireflexionsschicht 4.3 umfasste ebenfalls eine Schicht eines dielektrischen Materials 9.3 mit einem Brechungsindex kleiner 2,1 und eine Schicht eines optisch hochbrechenden Materials 10.3. Die Dicke der Schicht eines optisch hochbrechenden Materials 10.3 betrug 33,9 % der Dicke der Antireflexionsschicht 4.3. Jede funktionelle Schicht 3 wies eine Glättungsschicht 5 auf. Oberhalb jeder elektrisch leitfähigen Schicht 7 war eine Blockerschicht 11 angeordnet. Der Schichtaufbau der elektrisch leitfähigen Beschichtung 2 des Beispiels 3 entspricht dem Schichtaufbau aus Figur 2.

**Tabelle 1**

| Material | Bezugszeichen | | | Schichtdicke | | |
|---|---|---|---|---|---|---|
| | | | | Beispiel 1 | Beispiel 2 | Beispiel 3 |
| Glas | 12 | | | 2,1 mm | 2,1 mm | 2,1 mm |
| PVB | 17 | | | 0,76 mm | 0,76 mm | 0,76 mm |
| SiZrNₓ:Al | 4.4 | | | 40 nm | 40 nm | 40 nm |
| ZnO:Al | 8.3 | | 3.3 | 10 nm | 10 nm | 10 nm |
| NiCr | 11.3 | | | 0,3 nm | 0,3 nm | 0,3 nm |
| Ag | 7.3 | | | 16 nm | 16 nm | 16 nm |
| ZnO:Al | 6.3 | | | 10 nm | 10 nm | 10 nm |
| SnZnOₓ:Sb | 5.3 | | | (keine) | (keine) | 6 nm |
| SiZrNₓ:Al | 10.3 | 4.3 | | (keine) | (keine) | 20 nm |
| Si₃N₄ | 9.3 | | | 65 nm | 65 nm | 39 nm |
| ZnO:Al | 8.2 | | 3.2 | 10 nm | 10 nm | 10 nm |
| NiCr | 11.2 | | | 0,3 nm | 0,3 nm | 0,3 nm |
| Ag | 7.2 | | | 16 nm | 16 nm | 16 nm |
| ZnO:Al | 6.2 | | | 10 nm | 10 nm | 10 nm |
| SnZnOₓ:Sb | 5.2 | | | (keine) | (keine) | 6 nm |
| SiZrNₓ:Al | 10.2 | 4.2 | | 23 nm | 46 nm | 21 nm |
| Si₃N₄ | 9.2 | | | 46 nm | 23 nm | 42 nm |
| ZnO:Al | 8.1 | | 3.1 | 5 nm | 5 nm | 5 nm |
| NiCr | 11.1 | | | 0,3 nm | 0,3 nm | 0,3 nm |
| Ag | 7.1 | | | 15 nm | 15 nm | 15 nm |
| ZnO:Al | 6.1 | | | 10 nm | 10 nm | 10 nm |
| SnZnOₓ:Sb | 5.1 | | | 6 nm | 6 nm | 6 nm |
| SiZrNₓ:Al | 4.1 | | | 28 nm | 28 nm | 28 nm |
| Glas | 1 | | | 2,1 mm | 2,1 mm | 2,1 mm |

Die gemessenen Werte für den Flächenwiderstand R_{Quadrat} vor und nach der Temperaturbehandlung sind in Tabelle 3 zusammengefasst.

### Vergleichsbeispiel

Das Vergleichsbeispiel wurde genauso durchgeführt wie die Beispiele. Der Unterschied lag in der elektrisch leitfähigen Beschichtung 2. Die zwischen zwei elektrisch leitfähigen Schichten angeordneten Antireflexionsschichten umfassten jeweils nur eine dielektrische Schicht. Solche dielektrischen Schichten auf der Basis von Siliziumnitrid sind nach dem Stand der Technik bekannt. Zur besseren Vergleichbarkeit mit den erfindungsgemäßen Beispielen 1 bis 3 enthielten die oberste und die unterste Antireflexionsschicht Aluminium-dotiertes Silizium-Zirkonium-Nitrid. Zur besseren Vergleichbarkeit mit den erfindungsgemäßen Beispielen 1 bis 3 war oberhalb jeder elektrisch leitfähigen Schicht eine Blockerschicht enthaltend NiCr angeordnet und die unterste funktionelle Schicht umfasste eine Glättungsschicht enthaltend Antimon-dotiertes Zinn-Zink-Mischoxid. Die Schichtdicken der elektrisch leitfähigen Schichten, welche Silber enthalten, wurden genau so gewählt wie in den erfindungsgemäßen Beispielen 1 bis 3. Die genaue Schichtfolge mit Schichtdicken und Materialen des Vergleichsbeispiels ist in Tabelle 2 dargestellt.

Die gemessenen Werte für den Flächenwiderstand R_{Quadrat} vor und nach der Temperaturbehandlung sind in Tabelle 3 zusammengefasst.

**Tabelle 2**

| Material | Schichtdicke |
|---|---|
| Glas | 2,1 mm |
| PVB | 0,76 mm |
| SiZrNₓ:Al | 40 nm |
| ZnO:Al | 10 nm |
| NiCr | 0,3 nm |
| Ag | 16 nm |
| ZnO:Al | 10 nm |
| Si₃N₄ | 65 nm |
| ZnO:Al | 10 nm |
| NiCr | 0,3 nm |
| Ag | 16 nm |
| ZnO:Al | 10 nm |
| Si₃N₄ | 69 nm |
| ZnO:Al | 5 nm |
| NiCr | 0,3 nm |
| Ag | 15 nm |
| ZnO:Al | 10 nm |
| SnZnOₓ:Sb | 6 nm |
| SiZrNₓ:Al | 28 nm |
| Glas | 2,1 mm |

**Tabelle 3**

| | R_{Quadrat} [Ohm/Quadrat] vor Temperaturbehandlung | R_{Quadrat} [Ohm/Quadrat] nach Temperaturbehandlung und Lamination |
|---|---|---|
| Beispiel 1 | 1,15 | 0,91 |
| Beispiel 2 | 1,16 | 0,90 |
| Beispiel 3 | 1,07 | 0,83 |
| Vergleichbeispiel | 1,26 | 1,03 |

Das Beispiel 1 unterscheidet sich vom Vergleichsbeispiel durch die Ausgestaltung der Antireflexionsschicht 4.2 der zweiten funktionellen Schicht 3.2. Im Vergleichsbeispiel umfasste diese Antireflexionsschicht eine Siliziumnitrid-enthaltende Schicht, während die Antireflexionsschicht 4.2 im Beispiel 1 erfindungsgemäß eine Schicht eines dielektrischen Materials 9.2 enthaltend Siliziumnitrid und eine Schicht eines optisch hochbrechenden Materials 10.2 enthaltend Aluminium-dotiertes Silizium-Zirkonium-Nitrid umfasste. Die Dicke der Schicht eines optisch hochbrechenden Materials 10.2 betrug etwa 33,3 % der Dicke der Antireflexionsschicht 4.2. Der Flächenwiderstand R_{Quadrat} der elektrisch leitfähigen Beschichtung 2 war im erfindungsgemäßen Beispiel 1 überraschend bereits vor der Temperaturbehandlung gegenüber dem Vergleichsbeispiel um 9 % erniedrigt. Die Temperaturbehandlung führte zu einer weiteren Verringerung des Flächenwiderstand R_{Quadrat}. Nach Temperaturbehandlung und Lamination war der Flächenwiderstand R_{Quadrat} der elektrisch leitfähigen Beschichtung 2 im erfindungsgemäßen Beispiel 1 gegenüber dem Vergleichsbeispiel um 12 % erniedrigt.

Die erfindungsgemäße Ausgestaltung zumindest einer Antireflexionsschicht führte bei sonst gleichem Schichtaufbau der elektrisch leitfähigen Beschichtung 2 zu einer Verringerung des Flächenwiderstand R_{Quadrat}. Dieses Ergebnis war für den Fachmann unerwartet und überraschend.

Das erfindungsgemäße Beispiel 2 unterscheidet sich vom erfindungsgemäßen Beispiel 1 dadurch, dass die Dicke der Schicht eines optisch hochbrechenden Materials 10 etwa 66,7 % der Dicke der Antireflexionsschicht 4.2 betrug. Vor und nach der Temperaturbehandlung wurden ähnliche Werte für den Flächenwiderstand R_{Quadrat} der elektrisch leitfähigen Beschichtung 2 wie im Beispiel 1 beobachtet. Eine Erhöhung des Anteils der Schicht eines optisch hochbrechenden Materials 10.2 an der Antireflexionsschicht 4.2 führte also nicht zu einer weiteren wesentlichen Erniedrigung des Flächenwiderstand R_{Quadrat}. Allein die Anwesenheit der Schicht eines optisch hochbrechenden Materials 10 scheint für die Erniedrigung des Flächenwiderstands R_{Quadrat} der elektrisch leitfähigen Beschichtung 2 gegenüber dem Vergleichsbeispiel notwendig zu sein. Dieses Ergebnis war für den Fachmann unerwartet und überraschend.

Im Beispiel 3 umfasste jede zwischen zwei elektrisch leitfähigen Schichten 7 angeordnete Antireflexionsschicht 4.2, 4.3 eine Schicht eines dielektrischen Materials 9.2, 9.3 enthaltend Siliziumnitrid und eine Schicht eines optisch hochbrechenden Materials 10.2, 10.3 enthaltend Aluminium-dotiertes Silizium-Zirkonium-Nitrid. Die Dicke der Schicht eines optisch hochbrechenden Materials 10.2 betrug etwa 33,3 % der Dicke der Antireflexionsschicht 4.2. Die Dicke der Schicht eines optisch hochbrechenden Materials 10.3 betrug etwa 33,9 % der Dicke der Antireflexionsschicht 4.3. Zudem umfasst in Beispiel 3 jede funktionelle Schicht 3 eine Glättungsschicht 5. Der Flächenwiderstand R_{Quadrat} der elektrisch leitfähigen Beschichtung 2 war im Beispiel 3 gegenüber den Beispielen 1 und 2 sowie dem Vergleichsbeispiel deutlich erniedrigt. Gegenüber dem Vergleichsbeispiel war der Flächenwiderstand R_{Quadrat} vor der Temperaturbehandlung um 15 % und nach der Temperaturbehandlung um 19 % erniedrigt.

Die erfindungsgemäßen Ausgestaltungen der elektrisch leitfähigen Beschichtungen 2 in den Beispielen 1 bis 3 führten gegenüber dem Vergleichsbeispiel nach dem Stand der Technik zu einer Verringerung des Flächenwiderstands der leitfähigen Beschichtung 2. Ein geringere Flächenwiderstand R_{Quadrat} führt zu einer verbesserten spezifischen Heizleistung P, welche sich aus P = U²/(R_{Quadrat}*h²) ergibt.

Die Gesamttransmission durch die erfindungsgemäßen transparenten Scheiben war nach der Temperaturbehandlung größer 70 %. Die Farbwerte im L*a*b*-Farbraum lagen bei günstigen Werten. Die erfindungsgemäße transparente Scheibe erfüllt die gesetzlichen Anforderungen bezüglich Transmission und neutraler Färbung und kann als Verglasung von Fahrzeugen verwendet werden.

In weiteren Versuchen mit erfindungsgemäßen elektrisch leitfähigen Beschichtungen 2 umfassend drei elektrisch leitfähige Schichten 7 hat sich gezeigt, dass Flächenwiderstände bis minimal etwa 0,4 Ohm/Quadrat bei einer Transmission durch die transparente Scheibe von größer 70 % erreicht werden können.

### Bezugszeichenliste:

- (1): transparentes Substrat
- (2): elektrisch leitfähige Beschichtung
- (3): funktionelle Schicht
- (3.1), (3.2), (3.3): erste, zweite, dritte funktionelle Schicht
- (4): Antireflexionsschicht
- (4.1), (4.2), (4.3), (4.4): erste, zweite, dritte, vierte Antireflexionsschicht
- (5): Glättungsschicht
- (5.1), (5.2), (5.3): erste, zweite, dritte Glättungsschicht
- (6): erste Anpassungsschicht
- (6.1),(6.2), (6.3): erste, zweite, dritte erste Anpassungsschicht
- (7): elektrisch leitfähige Schicht
- (7.1), (7.2), (7.3): erste, zweite, dritte elektrisch leitfähige Schicht
- (8): zweite Anpassungsschicht
- (8.1), (8.2), (8.3): erste, zweite, dritte zweite Anpassungsschicht
- (9): Schicht eines dielektrischen Materials
- (9.2), (9.3): erste, zweite Schicht eines dielektrischen Materials
- (10): Schicht eines optisch hochbrechenden Materials
- (10.2), (10.3): erste, zweite Schicht eines optisch hochbrechenden Materials
- (11): Blockerschicht
- (11.1), (11.2), (11.3): erste, zweite, dritte Blockerschicht
- (12): zweite Scheibe
- (13): Sammelleiter
- (14): Spannungsquelle
- (15): Abdeckdruck
- (16): Zuleitung
- (17): thermoplastische Zwischenschicht

- a: Breite des durch (15) abgedeckten Bereichs
- b: Breite des beschichtungsfreien Bereichs

- A-A': Schnittlinie

## Patentansprüche

1. Transparente Kraftfahrzeugscheibe, umfassend mindestens ein transparentes Substrat (1) und mindestens eine elektrisch leitfähige Beschichtung (2) auf mindestens einer Oberfläche des transparenten Substrats (1), wobei
- die elektrisch leitfähige Beschichtung (2) mindestens zwei übereinander angeordnete funktionelle Schichten (3) aufweist und jede funktionelle Schicht (3) mindestens
∘ eine Antireflexionsschicht (4),
∘ oberhalb der Antireflexionsschicht (4) eine erste Anpassungsschicht (6) und
∘ oberhalb der ersten Anpassungsschicht (6) eine elektrisch leitfähige Schicht (7) umfasst,
**dadurch gekennzeichnet, dass** zumindest eine zwischen zwei elektrisch leitfähigen Schichten (7) angeordnete Antireflexionsschicht (4) mindestens
∘ eine Schicht eines dielektrischen Materials (9) mit einem Brechungsindex kleiner 2,1 und
∘ eine Schicht eines optisch hochbrechenden Materials (10) mit einem Brechungsindex größer oder gleich 2,1 umfasst.

2. Transparente Kraftfahrzeugscheibe nach Anspruch 1, wobei die elektrisch leitfähige Beschichtung (2) eine elektrisch beheizbare Beschichtung ist.

3. Transparente Kraftfahrzeugscheibe nach Anspruch 1, wobei die elektrisch leitfähige Beschichtung (2) eine Beschichtung mit reflektierenden Eigenschaften für den InfrarotBereich ist.

4. Transparente Kraftfahrzeugscheibe nach einem der Ansprüche 1 bis 3, wobei oberhalb der obersten funktionellen Schicht (3) eine weitere Antireflexionsschicht (4) angeordnet ist.

5. Transparente Kraftfahrzeugscheibe nach Anspruch 4, wobei die oberste und die unterste Antireflexionsschicht (4) als Schichten eines optisch hochbrechenden Materials mit einen Brechungsindex größer oder gleich 2,1 ausgestaltet sind und bevorzugt zumindest ein Silizium-Metall-Mischnitrid, besonders bevorzugt ein Silizium-Zirkonium-Mischnitrid, wie Aluminium-dotiertes Silizium-Zirkonium-Mischnitrid enthalten.

6. Transparente Kraftfahrzeugscheibe nach einem der Ansprüche 1 bis 5, wobei die Dicke der Schicht eines optisch hochbrechenden Materials (10) von 10 % bis 99 %, bevorzugt von 25 % bis 75 % der Dicke der Antireflexionsschicht (4), welche die Schicht optisch hochbrechenden Materials (10) umfasst, beträgt.

7. Transparente Kraftfahrzeugscheibe nach einem der Ansprüche 1 bis 6, wobei jede zwischen zwei elektrisch leitfähigen Schichten (7) angeordnete Antireflexionsschicht (4) mindestens eine Schicht eines dielektrischen Materials (9) mit einem Brechungsindex kleiner 2,1 und eine Schicht eines optisch hochbrechenden Materials (10) mit einem Brechungsindex größer oder gleich 2,1 umfasst.

8. Transparente Kraftfahrzeugscheibe nach einem der Ansprüche 1 bis 7, wobei die Dicke der zwischen zwei elektrisch leitfähigen Schichten (7) angeordneten Antireflexionsschichten (4) von 35 nm bis 70 nm, bevorzugt von 45 nm bis 60 nm beträgt.

9. Transparente Kraftfahrzeugscheibe nach einem der Ansprüche 1 bis 8, wobei die Schicht eines optisch hochbrechenden Materials (10) zumindest ein Silizium-Metall-Mischnitrid, besonders bevorzugt ein Silizium-Zirkonium-Mischnitrid, wie Aluminium-dotiertes Silizium-Zirkonium-Mischnitrid enthält.

10. Transparente Kraftfahrzeugscheibe nach einem der Ansprüche 1 bis 9, wobei die Schicht eines dielektrischen Materials (9) zumindest Siliziumnitrid enthält.

11. Transparente Kraftfahrzeugscheibe nach einem der Ansprüche 1 bis 10, wobei jede funktionelle Schicht (3) oberhalb der elektrisch leitfähigen Schicht (7) eine zweite Anpassungsschicht (8) umfasst.

12. Transparente Kraftfahrzeugscheibe nach einem der Ansprüche 1 bis 11, wobei die elektrisch leitfähige Beschichtung (2) mindestens eine Glättungsschicht (5) umfasst, die unterhalb einer der ersten Anpassungsschichten (6) angeordnet ist und wobei bevorzugt jede funktionelle Schicht (3) eine Glättungsschicht (5) unterhalb der ersten Anpassungsschicht (6) umfasst.

13. Transparente Kraftfahrzeugscheibe nach Anspruch 12, wobei die Glättungsschicht (5) zumindest ein nichtkristallines Oxid, bevorzugt ein nichtkristallines Mischoxid, besonders bevorzugt ein Zinn-Zink-Mischoxid, wie Antimon-dotiertes Zinn-Zink-Mischoxid enthält und bevorzugt eine Schichtdicke von 3 nm bis 20 nm, besonders bevorzugt von 4 nm bis 12 nm aufweist.

14. Transparente Kraftfahrzeugscheibe nach einem der Ansprüche 1 bis 13, wobei die elektrisch leitfähige Schicht (7) zumindest Silber oder eine silberhaltige Legierung enthält und bevorzugt eine Schichtdicke von 8 nm bis 25 nm aufweist.

15. Transparente Kraftfahrzeugscheibe nach einem der Ansprüche 1 bis 14, wobei die erste Anpassungsschicht (6) und / oder die zweite Anpassungsschicht (8) Zinkoxid ZnO_{1-δ} mit 0 ≤ δ ≤ 0,01, wie Aluminium-dotiertes Zinkoxid enthält und bevorzugt eine Dicke von 3 nm bis 20 nm, besonders bevorzugt von 4 nm bis 12 nm aufweist.

16. Transparente Kraftfahrzeugscheibe nach einem der Ansprüche 1 bis 15, wobei zumindest eine funktionelle Schicht (3), bevorzugt jede funktionelle Schicht (3) zumindest eine Blockerschicht (11) umfasst, die unmittelbar oberhalb und / oder unmittelbar unterhalb der elektrisch leitfähigen Schicht (7) angeordnet ist und die bevorzugt zumindest Niob, Titan, Nickel, Chrom oder Legierungen davon enthält, bevorzugt Nickel-Chrom-Legierungen, und die bevorzugt eine Schichtdicke von 0,1 nm bis 2 nm aufweist.

17. Transparente Kraftfahrzeugscheibe nach einem der Ansprüche 1 bis 16, wobei die elektrisch leitfähige Beschichtung (2) einen Flächenwiderstand von kleiner 1 Ohm/Quadrat, bevorzugt von 0,4 Ohm/Quadrat bis 0,9 Ohm/Quadrat aufweist.

18. Transparente Kraftfahrzeugscheibe nach einem der Ansprüche 1 bis 17, wobei das transparente Substrat (1) über zumindest eine thermoplastische Zwischenschicht (17) mit einer zweiten Scheibe (12) zu einer Verbundscheibe verbunden ist und wobei die Gesamttransmission der Verbundscheibe bevorzugt größer 70 % beträgt.

19. Verfahren zur Herstellung einer transparenten Kraftfahrzeugscheibe mit elektrisch leitfähiger Beschichtung (2) nach einem der Ansprüche 1 bis 18, wobei zumindest zwei funktionelle Schichten (3) nacheinander auf ein transparentes Substrat (1) aufgebracht werden und zum Aufbringen jeder funktionellen Schicht (3) nacheinander mindestens
(a) eine Antireflexionsschicht (4),
(b) eine erste Anpassungsschicht (6) und
(c) eine elektrisch leitfähige Schicht (7)
aufgebracht werden und wobei zum Aufbringen zumindest einer Antireflexionsschicht (4) mindestens
- eine Schicht eines dielektrischen Materials (9) mit einem Brechungsindex kleiner 2,1 und
- eine Schicht eines optisch hochbrechenden Materials (10) mit einem Brechungsindex größer oder gleich 2,1
aufgebracht werden.

20. Verwendung der transparenten Kraftfahrzeugscheibe nach einen der Ansprüche 1 bis 18 als Scheibe oder als Bestandteil einer Scheibe, insbesondere als Bestandteil einer Verbundscheibe, in Fortbewegungsmitteln für den Verkehr auf dem Lande, in der Luft oder zu Wasser, insbesondere in Kraftfahrzeugen beispielsweise als Windschutzscheibe, Heckscheibe, Seitenscheibe und / oder Dachscheibe, insbesondere zur Beheizung einer Scheibe und / oder zur Verminderung der Aufheizung eines Innenraums.

## Claims

1. Transparent motor vehicle pane, comprising at least one transparent substrate (1) and at least one electrically conductive coating (2) on at least one surface of the transparent substrate (1), wherein
- the electrically conductive coating (2) has at least two functional layers (3) arranged one above another, and each functional layer (3) comprises at least
∘ one anti-reflection layer (4),
∘ above the anti-reflection layer (4), a first matching layer (6), and
∘ above the first matching layer (6), an electrically conductive layer (7),
**characterized in that** at least one anti-reflection layer (4) arranged between two electrically conductive layers (7) comprises at least
∘ one layer of a dielectric material (9) with a refractive index less than 2.1, and
∘ one layer of an optically highly refractive material (10) with a refractive index greater than or equal to 2.1.

2. Transparent motor vehicle pane according to claim 1, wherein the electrically conductive coating (2) is an electrically heatable coating.

3. Transparent motor vehicle pane according to claim 1, wherein the electrically conductive coating (2) is a coating with reflecting properties for the infrared range.

4. Transparent motor vehicle pane according to one of claims 1 through 3, wherein another anti-reflection layer (4) is arranged above the first functional layer (3).

5. Transparent motor vehicle pane according to claim 4, wherein the uppermost and the lowest anti-reflection layer (4) are configured as layers of an optically highly refractive material with a refractive index greater than or equal to 2.1 and preferably contain at least one mixed silicon/metal nitride, particularly preferably a mixed silicon/zirconium nitride, such as aluminum-doped mixed silicon/zirconium nitride.

6. Transparent motor vehicle pane according to one of claims 1 through 5, wherein the thickness of the layer of an optically highly refractive material (10) is from 10% to 99%, preferably from 25% to 75% of the thickness of the anti-reflection layer (4) that includes the layer of an optically highly refractive material (10).

7. Transparent motor vehicle pane according to one of claims 1 through 6, wherein each anti-reflection layer (4) arranged between two electrically conductive layers (7) includes at least one layer of a dielectric material (9) with a refractive index less than 2.1 and one layer of an optically highly refractive material (10) with a refractive index greater than or equal to 2.1.

8. Transparent motor vehicle pane according to one of claims 1 through 7, wherein the thickness of the anti-reflection layers (4) arranged between two electrically conductive layers (7) is from 35 nm to 70 nm, preferably from 45 nm to 60 nm.

9. Transparent motor vehicle pane according to one of claims 1 through 8, wherein the layer of an optically highly refractive material (10) contains at least one mixed silicon/metal nitride, particularly preferably a mixed silicon/zirconium nitride, such as aluminum-doped mixed silicon/zirconium nitride.

10. Transparent motor vehicle pane according to one of claims 1 through 9, wherein the layer of a dielectric material (9) contains at least silicon nitride.

11. Transparent motor vehicle pane according to one of claims 1 through 10, wherein each functional layer (3) above the electrically conductive layer (7) includes a second matching layer (8).

12. Transparent motor vehicle pane according to one of claims 1 through 11, wherein the electrically conductive coating (2) includes at least one smoothing layer (5) that is arranged below one of the first matching layers (6) and wherein, preferably, each functional layer (3) includes a smoothing layer (5) below the first matching layer (6).

13. Transparent motor vehicle pane according to claim 12, wherein the smoothing layer (5) contains at least one non-crystalline oxide, preferably a non-crystalline mixed oxide, particularly preferably a mixed tin/zinc oxide, such as antimony-doped mixed tin/zinc oxide and preferably has a layer thickness from 3 nm to 20 nm, particularly preferably from 4 nm to 12 nm.

14. Transparent motor vehicle pane according to one of claims 1 through 13, wherein the electrically conductive layer (7) contains at least silver or a silver-containing alloy and preferably has a layer thickness from 8 nm to 25 nm.

15. Transparent motor vehicle pane according to one of claims 1 through 14, wherein the first matching layer (6) and / or the second matching layer (8) contains zinc oxide ZnO_{1-δ} with 0 ≤ δ ≤ 0.01, such as aluminum-doped zinc oxide and preferably has a thickness from 3 nm to 20 nm, particularly preferably from 4 nm to 12 nm.

16. Transparent motor vehicle pane according to one of claims 1 through 15, wherein at least one functional layer (3), preferably each functional layer (3), includes at least one blocker layer (11), which is arranged immediately above and / or immediately below the electrically conductive layer (7) and which preferably contains at least niobium, titanium, nickel, chromium, or alloys thereof, particularly preferably nickel-chromium alloys, and which preferably has a layer thickness from 0.1 nm to 2 nm.

17. Transparent motor vehicle pane according to one of claims 1 through 16, wherein the electrically conductive coating (2) has a sheet resistance of less than 1 ohm/square, preferably from 0.4 ohm/square to 0.9 ohm/square.

18. Transparent motor vehicle pane according to one of claims 1 through 17, wherein the transparent substrate (1) is bonded to a second pane (12) via at least one thermoplastic intermediate layer (17) to form a composite pane and wherein the total transmittance of the composite pane is preferably greater than 70%.

19. Method for producing a transparent motor vehicle pane with an electrically conductive coating (2) according to one of claims 1 through 18, wherein at least two functional layers (3) are applied one after another on a transparent substrate (1) and for applying each functional layer (3) one after another at least
(a) an anti-reflection layer (4),
(b) a first matching layer (6), and
(c) an electrically conductive layer (7)
are applied, and wherein for applying at least one anti-reflection layer (4) at least
- one layer of a dielectric material (9) with a refractive index less than 2.1 and
- one layer of an optically highly refractive material (10) with a refractive index greater than or equal to 2.1
are applied.

20. Use of the transparent motor vehicle pane according to one of claims 1 through 18 as a pane or as a component of a pane, in particular as a component of a composite pane, in means of transportation for travel on land, in the air, or on water, in particular in motor vehicles, for example, as a windshield, rear window, side window, and / or roof pane, in particular for heating a pane and / or for reducing the heating up of an interior space.

## Revendications

1. Vitre transparente pour véhicule automobile, comportant au moins un substrat transparent (1) et au moins un revêtement (2) conducteur de l'électricité sur au moins une surface du substrat transparent (1), où
- le revêtement (2) conducteur de l'électricité présente au moins deux couches fonctionnelles (3) disposées l'une au-dessus de l'autre et chaque couche fonctionnelle (3) comporte au moins
∘ une couche anti-réfléchissante (4) ;
∘ une première couche d'adaptation (6) au-dessus de la couche anti-réfléchissante (4) ; et
∘ une couche (7) conductrice de l'électricité au-dessus de la première couche d'adaptation (6),
**caractérisée par le fait qu'**au moins une couche anti-réfléchissante (4) disposée entre deux couches (7) conductrices de l'électricité comporte au moins
∘ une couche d'une matière diélectrique (9) ayant un indice de réfraction inférieur à 2,1 ; et
∘ une couche d'une matière (10) à réfraction optique élevée, ayant un indice de réfraction supérieur ou égal à 2,1.

2. Vitre transparente pour véhicule automobile selon la revendication 1, dans laquelle le revêtement (2) conducteur de l'électricité est un revêtement apte à être chauffé électriquement.

3. Vitre transparente pour véhicule automobile selon la revendication 1, dans laquelle le revêtement (2) conducteur de l'électricité est un revêtement ayant des propriétés réfléchissantes pour la gamme infrarouge.

4. Vitre transparente pour véhicule automobile selon l'une des revendications 1 à 3, dans laquelle une autre couche anti-réfléchissante (4) est disposée au-dessus de la couche fonctionnelle (3) la plus haute.

5. Vitre transparente pour véhicule automobile selon la revendication 4, dans laquelle la couche anti-réfléchissante (4) la plus haute et la couche anti-réfléchissante (4) la plus basse sont agencées en tant que couches d'une matière à réfraction optique élevée ayant un indice de réfraction supérieur ou égal à 2,1 et contiennent de préférence au moins un nitrure mixte de silicium-métal, de façon particulièrement préférée un nitrure mixte de silicium-zirconium, tel qu'un nitrure mixte de silicium-zirconium dopé à l'aluminium.

6. Vitre transparente pour véhicule automobile selon l'une des revendications 1 à 5, dans laquelle l'épaisseur de la couche d'une matière (10) à réfraction optique élevée est de 10 % à 99 %, de préférence de 25 % à 75 % de l'épaisseur de la couche anti-réfléchissante (4) qui comporte la couche (10) de matière à réfraction optique élevée.

7. Vitre transparente pour véhicule automobile selon l'une des revendications 1 à 6, dans laquelle chaque couche anti-réfléchissante (4) disposée entre deux couches (7) conductrices de l'électricité comporte au moins une couche d'une matière diélectrique (9) ayant un indice de réfraction inférieur à 2,1 et une couche d'une matière (10) à réfraction optique élevée ayant un indice de réfraction supérieur ou égal à 2,1.

8. Vitre transparente pour véhicule automobile selon l'une des revendications 1 à 7, dans laquelle l'épaisseur des couches anti-réfléchissantes (4) disposées entre deux couches (7) conductrices de l'électricité est de 35 nm à 70 nm, de préférence de 45 nm à 60 nm.

9. Vitre transparente pour véhicule automobile selon l'une des revendications 1 à 8, dans laquelle la couche d'une matière (10) à réfraction optique élevée contient au moins un nitrure mixte de silicium-métal, de façon particulièrement préférée un nitrure mixte de silicium-zirconium, tel qu'un nitrure mixte de silicium-zirconium dopé à l'aluminium.

10. Vitre transparente pour véhicule automobile selon l'une des revendications 1 à 9, dans laquelle la couche d'une matière diélectrique (9) contient au moins du nitrure de silicium.

11. Vitre transparente pour véhicule automobile selon l'une des revendications 1 à 10, dans laquelle chaque couche fonctionnelle (3) comporte une seconde couche d'adaptation (8) au-dessus de la couche (7) conductrice de l'électricité.

12. Vitre transparente pour véhicule automobile selon l'une des revendications 1 à 11, dans laquelle le revêtement (2) conducteur de l'électricité comporte au moins une couche de lissage (5) qui est disposée au-dessous de l'une des premières couches d'adaptation (6) et dans laquelle de préférence chaque couche fonctionnelle (3) comporte une couche de lissage (5) au-dessous de la première couche d'adaptation (6).

13. Vitre transparente pour véhicule automobile selon la revendication 12, dans laquelle la couche lissage (5) contient au moins un oxyde non cristallin, de préférence un oxyde mixte non cristallin, de façon particulièrement préférée un oxyde mixte d'étain-zinc, tel qu'un oxyde mixte d'étain-zinc dopé à l'antimoine et de préférence présente une épaisseur de couche de 3 nm à 20 nm, de façon particulièrement préférée de 4 nm à 12 nm.

14. Vitre transparente pour véhicule automobile selon l'une des revendications 1 à 13, dans laquelle la couche (7) conductrice de l'électricité contient au moins de l'argent ou un alliage contenant de l'argent et de préférence présente une épaisseur de couche de 8 nm à 25 nm.

15. Vitre transparente pour véhicule automobile selon l'une des revendications 1 à 14, dans laquelle la première couche d'adaptation (6) et/ou la seconde couche d'adaptation (8) contient de l'oxyde de zinc ZnO_{1-δ} avec 0 ≤ δ ≤ 0,01, tel qu'un oxyde de zinc dopé à l'aluminium et de préférence présente une épaisseur de 3 nm à 20 nm, de façon particulièrement préférée de 4 nm à 12 nm.

16. Vitre transparente pour véhicule automobile selon l'une des revendications 1 à 15, dans laquelle au moins une couche fonctionnelle (3), de préférence chaque couche fonctionnelle (3), comporte au moins une couche de blocage (11) qui est disposée immédiatement au-dessus et/ou immédiatement au-dessous de la couche (7) conductrice de l'électricité et qui contient de préférence au moins du niobium, du titane, du nickel, du chrome ou des alliages de ceux-ci, de préférence des alliages nickel-chrome, et qui de préférence présente une épaisseur de couche de 0,1 nm à 2 nm.

17. Vitre transparente pour véhicule automobile selon l'une des revendications 1 à 16, dans laquelle le revêtement (2) conducteur de l'électricité a une résistance de feuille de moins de 1 ohm/carré, de préférence de 0,4 ohm/carré à 0,9 ohm/carré.

18. Vitre transparente pour véhicule automobile selon l'une des revendications 1 à 17, dans laquelle le substrat transparent (1) est lié à une seconde vitre (12) par l'intermédiaire d'au moins une couche intermédiaire thermoplastique (17) pour former une vitre composite et dans laquelle la transmittance totale de la vitre composite est de préférence supérieure à 70 %.

19. Procédé de fabrication d'une vitre transparente pour véhicule automobile ayant un revêtement (2) conducteur de l'électricité selon l'une des revendications 1 à 18, dans lequel au moins deux couches fonctionnelles (3) sont appliquées l'une après l'autre sur un substrat transparent (1) et, pour l'application de chaque couche fonctionnelle (3) l'une après l'autre, au moins
(a) une couche anti-réfléchissante (4) ;
(b) une première couche d'adaptation (6) ; et
(c) une couche (7) conductrice de l'électricité
sont appliquées et dans lequel pour l'application d'au moins une couche anti-réfléchissante (4), au moins
- une couche d'une matière diélectrique (9) ayant un indice de réfraction inférieur à 2,1 ; et
- une couche d'une matière (10) à réfraction optique élevée ayant un indice de réfraction supérieur ou égal à 2,1
sont appliquées.

20. Utilisation de la vitre transparente pour véhicule automobile selon l'une des revendications 1 à 18 en tant que vitre ou en tant qu'élément d'une vitre, en particulier en tant qu'élément d'une vitre composite, dans des moyens de locomotion terrestre, aérienne ou maritime, en particulier dans des véhicules automobiles par exemple en tant que pare-brise, vitre arrière, vitre latérale et/ou vitre de toit, en particulier pour le chauffage d'une vitre et/ou pour la réduction du chauffage d'un espace intérieur.
